# EUROPEAN PATENT SPECIFICATION

(11) **EP 1 462 930 B1**
(45) Date of publication and mention of the grant of the patent: **07.11.2012**
(21) Application number: 04007558.2
(22) Date of filing: 29.03.2004
(51) Int. Cl.: G06F 3/14, G09G 5/34, G01C 21/36

(54) **Display processing device, display control method and display processing program for controlling image display based on control information included in an image file**
Anzeigeverarbeitungsvorrichtung, Anzeigesteuerverfahren und Anzeigeverarbeitungsprogramme zur Steuerung der Bildanzeige auf der Basis von in einer Bilddatei enthaltener Steuerinformation
Dispositif de traitement d'affichage, procédé de contrôle d'affichage et programme de traitement d'affichage pour contrôler l'affichage d'images basés sur de l'information de contrôle incluse dans un fichier d'image

(30) Priority: 27.03.2003 JP 2003088256; 23.02.2004 JP 2004047040
(43) Date of publication of application: 29.09.2004
(73) Proprietor: CASIO COMPUTER CO., LTD., Tokyo 151-0071 (JP)
(72) Inventor: Takahashi, Oh, Hamura-shi Tokyo 205-0016 (JP); Nagatomo, Shoichi, Fussa-shi Tokyo 197-0011 (JP)
(74) Representative: Grünecker, Kinkeldey, Stockmair & Schwanhäusser

(56) References cited:
- EP-A- 1 187 068
- JP-A- 11 339 056
- US-A1- 2002 173 906
- US-A1- 2003 043 136

## Description

The present invention relates to a display processing device, display control method and display processing program which displays images without performing a particular display control operation.

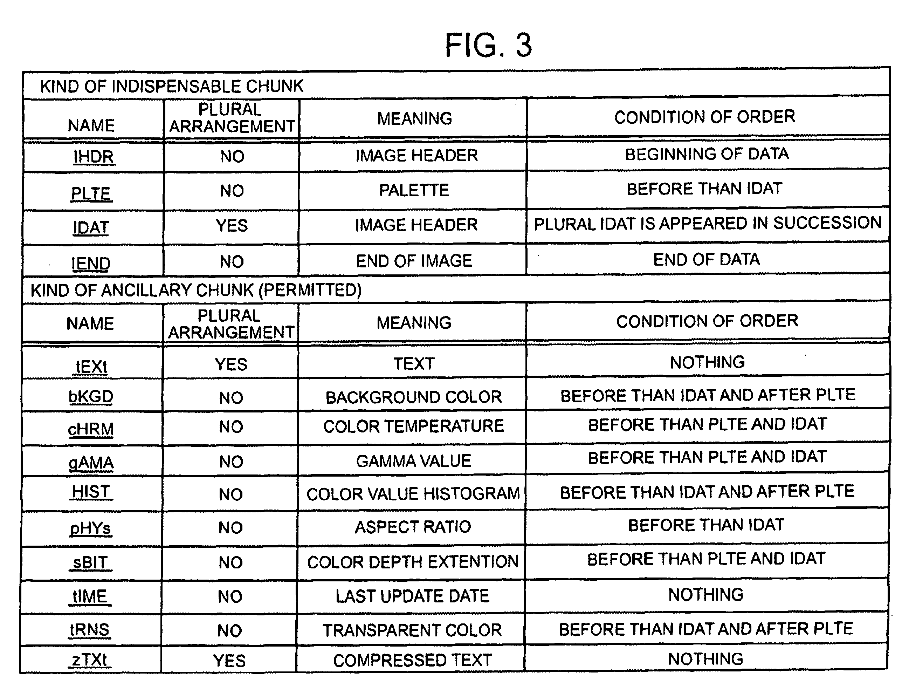

In recent years, a camera (including attachable and detachable types) comprising a communications terminal, such as a cellular/mobile phone and the like, from being able to connect with the Web to receive various multimedia files to improvement in the number of display colors, it is possible to display images with a lot of informational content (or image media) . Furthermore, as the image display process method conventionally known, for example, the user personally performs an enlargement (zoom)/reduction (shrink) operation of the image data or the prior art display process technique is applied when the image display size differs from the display viewable size of the receiving side. Consequently, the number of times (scale factor) in which the image scrolls is determined automatically when the image size is larger than the displayviewable size, and automatic scrolling is commonly disclosed (for example, Japanese Laid-Open Patent Application (Kokai) (A) No. 2000-267646, title "AUTOMATIC PICTURE SCROLLING DEVICE," refer to page 3, figure 3).

However, when sending and receiving images on a wireless communications terminal, namely cellular/mobile phones and the like, and such a display process method is applied, there exists a drawback with the user's transmitting side of the wireless communications terminal whereby the image file corresponding to the image and the display processing information which accompanies the image has to be transmitted as separate data when the user desires to display an image and specify the scroll direction, desires to make an image zoom in to observe a portion of an image or even when desiring to zoom out from a portion of an image to its entirety in the receiver' s side of the wireless communications terminal.

Reference JP 11339056 (A) relates to a technique for restricting editing of image data on the basis of control information included in the image file. To this end, a device is provided with a data analyzing means for extracting data control information from data to which the data control information for controlling the operation of each kind of processing is applied, data processing means for each kind of processing to data to which the data control information is applied, display means for displaying a processing function related with each kind of processing, and control means for controlling the data processing means and the display means based on the data control information.

Reference EP 1187068 (A2) relates to an apparatus and a method for generating an image file that can correctly reproduce image data at a predetermined output device. The image file includes an image data storage area that stores image data, and a control information storage area stores output control information. The image data is stored in JPEG format for example, and output control information is stored in TIFF format. The output device control information is information set so as to be able to obtain an optimal image output results according to a paired-combination of the input device and output device, taking into consideration their respective image processing characteristics.

Reference US 2003043136 (A1) relates to an information transfer system, comprising a receiver and a transmitter for transferring an information signal to the receiver via a transfer medium. The information signal comprises main data and sub data. The sub data comprises coded text lines having a plurality of character codes. The receiver is provided with a character display unit for displaying characters corresponding with the character codes in the coded text lines. The number of character display positions is less than the number of character codes in the coded text line. The receiver is provided with display control means for controlling the display of characters corresponding to the character codes included in the coded text line in dependence on serial control codes included in the coded text line. The system enables that significant parts of the text information available in the sub data can be shown on both a full multi-line display units for displaying full text lines and a 1-line display with a relative small number of digits. The invention is very suitable for systems with small sized receivers, such as e.g. portable players and car radios, and receivers with a display on its remote controller, because there is not much space available for a display unit.

From reference US 2002173906 (A1) a portable communication device is known, which comprises a GPS module for determining the present position, an electronic compass module for detecting an azimuth, a display, and a wireless communicator. Herein, the position information representing the destination and present position is transmitted towards the navigation server, which in turn provides the map information including the destination and present position, based on which corresponding icon symbols are indicated in the map displayed on the screen. In addition, the azimuth is also indicated by an angle departing from a north direction of the map information. Specifically, an azimuthal arrow symbol is displayed in proximity to the icon symbol representing the present position in the map, or the icon symbol is inclined by the aforementioned angle. Thus, it is possible to create images for navigation that are appropriately displayed on the screen and are recognizable in viewing without using expensive graphic processing.

The present invention has been made in view of the circumstances mentioned above. Accordingly, the purpose of the present invention is to provide a display processing device, a display control method and a display processing program in which the image display processing can be performed by simpler data processing without needing the complicated file management and data management regarding the image display processing.

This is achieved by the features of the independent claims. Preferred embodiments are subject matter of the dependent claims.

The above and further obj ects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

FIG. 1 is a block diagram showing the configuration of the cellular phone according to the first embodiment of this invention;
FIG. 2 is a conceptual diagram showing the PNG image format file;
FIG. 3 is a conceptual diagram showing a type of chunk;
FIG. 4 is a conceptual diagram showing the structure of a chunk;
FIGs. 5A and 5B are conceptual diagrams showing an example of the text chunk data;
FIGs. 6A~6D are conceptual diagrams showing an example of the text chunk data according to the first embodiment;
FIG. 7 is a flowchart for explaining the operation of the cellular phone which displays the images in the first embodiment;
FIGs. 8A~8C are mimetic diagrams showing an example of the image display scrolled in the horizontal direction;
FIGs. 9A~9C is a mimetic diagram showing an example of the image display scrolled in the vertical direction;
FIGs. 10A~10C are mimetic diagrams showing an example of an enlarged image display;
FIGs. 11A~11C are mimetic diagrams showing an example of a reduced image display;
FIGs. 12A~12D are conceptual diagrams showing an illustrative example of the used text chunk in the second embodiment;
FIG. 13 is a flowchart for explaining the operation of the cellular phone which displays the images in the second embodiment;
FIGs. 14A~14D are mimetic diagrams showing an example of the image display control according to the second embodiment;
FIGs. 15A and 15B are conceptual diagrams showing an illustrative example of the used text chunk in the third embodiment;
FIG. 16 is a flowchart for explaining the operation of the cellular phone according to the third embodiment;
FIG. 17 is a flowchart for explaining the operation of the image processing;
FIGs. 18A and 18B are mimetic diagrams showing an example of the image display control according to the third embodiment;
FIG. 19 is a conceptual diagram showing the configuration of an example system operation of the fourth embodiment;
FIGs. 20A and 20B are outline views of the cellular phones 3a and 3b applicable to the fourth embodiment;
FIG. 21 is a block diagram showing the configuration of the cellular phones 3a and 3b according to the fourth embodiment;
FIGs. 22A and 22B are conceptual diagrams showing an illustrative example of the used text chunk in the fourth embodiment;
FIG. 23 is a flowchart for explaining the operation which inserts additional information in the image text chunk in the cellular phone 3a;
FIG. 24 is a flowchart for explaining the operation of the cellular phone 3b;
FIGs. 25A~25D are mimetic diagrams showing an example of the image display control according to the fourth embodiment;
FIG. 26 is a mimetic diagram showing an example of the file structure,when inserting additional information into an Exif standard image file according to the fifth embodiment;
FIG. 27 is a flowchart for explaining the operation which inserts additional information into the tag information of the image file in the cellular phone 3a; and
FIG. 28 is a flowchart for explaining the operation of the cellular phone 3b.

### DETAILED DESCRIPTION OF THE PREFERRED EMBODIMENTS

The present invention will hereinafter be described in detail with reference to the embodiments shown in the accompanying drawings.

### A. First embodiment

### A-1. Configuration of the first embodiment

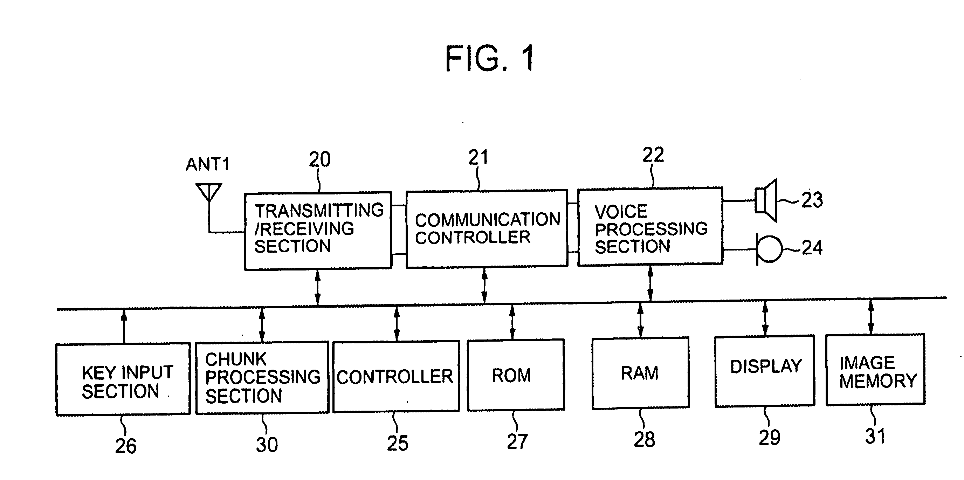

FIG. 1 is a block diagram showing the configuration of the cellular phone according to the first embodiment of this invention. Referring to FIG. 1, a transmitting and receiving section 20 (hereinafter referred to as "transceiver" for convenience) consists of a frequency conversion section and a modem. In order to carry out base station and wireless communications which are not illustrated, frequency conversion of the electromagnetic waves as well as modulation and demodulation are performed via an antenna ANT1. Next, a communications controller 21 performs telecommunications control based on predetermined transmission methods (for example, Time Division Multiple Access (TDMA), Code-Division Multiple Access (CDMA) and the like). A voice processing section 22 performs encoding/decoding of the audio signal. This audio signal is decoded by the Code Excited Linear Predictor (CELP) encoding method from the communications controller 21 which is converted into an analog audio signal by Digital-Analog (D/A) conversion and made to pronounce from a loudspeaker 23. Whereas, the analog signal inputted from a microphone 24 is encoded by the CELP encoding method digitized by Analog-Digital (A/D) conversion and sent to the communications controller 21. Additionally, the communications controller 21 converts the image files which are transmitted and received in this embodiment into the data format specified by the above-mentioned transmission methods and inputs/outputs them to/from the transceiver 20.

Next, a controller 25 controls the entire device according to a predetermined program. Specifically, the control section 25 controls the display of images according to the image display control information extracted from the text chunk of the image file by a chunk processing section 30 (described later) when executing a browser application for displaying images. As an image file, for example, an image file attached to a download from a network or received E-mail, there is an image file and the like inserted with the image display control information in the text chunk already to transmit.

A key input section 26 consists of an alphanumeric keypad to input other person's telephone numbers or character strings, specifically the keyword or parameters equivalent to the display control information inserted/described in the text chunk in this embodiment, a switch to perform on hook/off hook, a volume switch to change the audio output and the like. The program and various kinds of parameters and the like performed by the above-mentioned controller 25 are stored in a Read-Only Memory (ROM) 27. Additionally, a Random Access Memory (RAM) 28 comprises an area for storing an address book and schedules, a storage area to store data generated with control of the above-mentioned controller 25, a working area and the like.

Next, the display 29 is composed of a liquid crystal display comprising Quarter Video Graphics Array (QVGA) class full-color display capabilities which displays a variety of information, such as the operation mode, telephone numbers, duration of a call, characters, images and the like under control of the above-mentioned controller 25. The chunk processing section 30 inserts the image display control information in the text chunk of the Portable Network Graphics (PNG) image file format (transmitting side). Whereas, on the receiving side, the image display control information inserted in the text chunk is extracted (receiving side). An image memory 31 stores the image file attached to the image file downloaded from a network, an E-mail or the like.

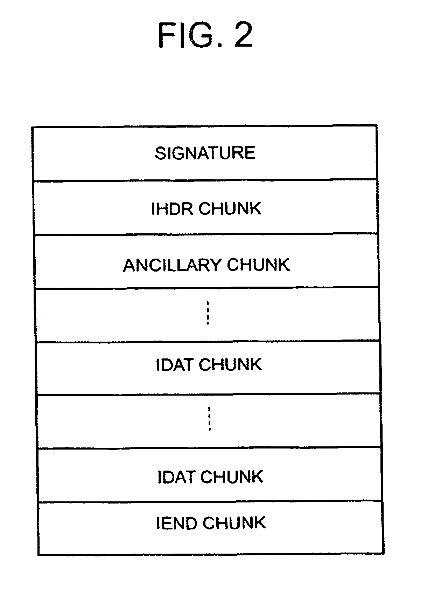

FIG. 2 is a conceptual diagram showing the PNG image format file. The PNG image file format consists of a number of chunks called independent blocks of data. The chunks include the IHDR header chunk which contains the basic information about the image data as being a PNG image file format; the ancillary chunk which describes the text, color transparency, and the like; the IDAT image data chunk which stores the actual image data; and the IEND image trailer chunk which marks the end of the PNG file or data stream.

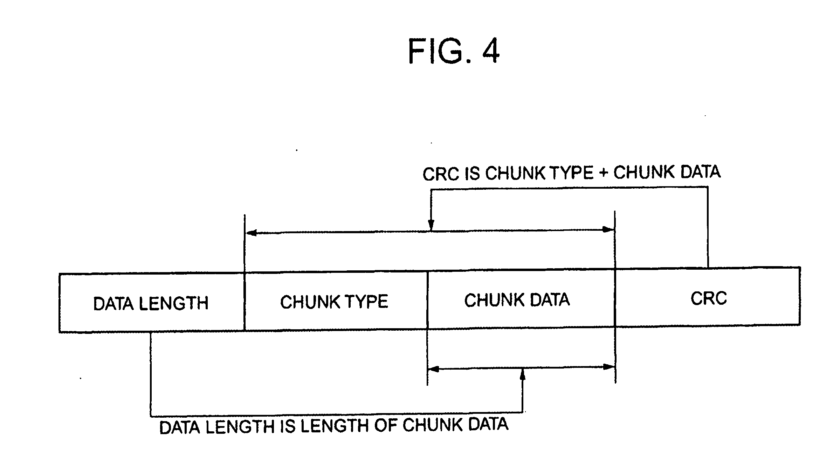

In the chunks, as shown in FIG. 3, many types are available. Among these is the text (tEXt) chunk which has a free insertion point within the file and, if the contents are also text codes, it can be constituted freely. The chunk structure, as shown in FIG. 4, since dividing the data length is possible, a plurality of chunks can be written in order arbitrarily and can constitute the entire data.

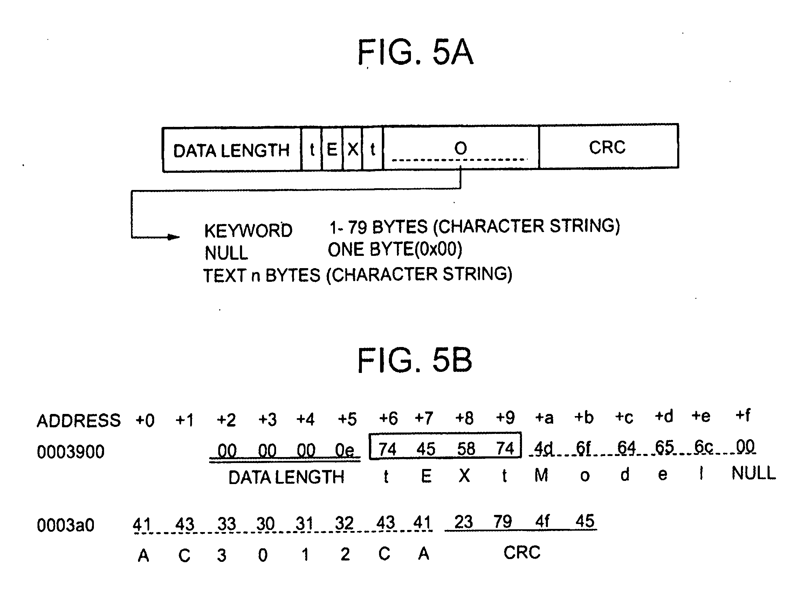

FIGs. 5A and 5B are conceptual diagrams showing examples of the text chunk data. The text chunk comprises two elements, the "keyword" and the actual "text. " Between these, the original data with the "keyword" is defined and image browsing software performs a predetermined operation when judged that this keyword has been added.

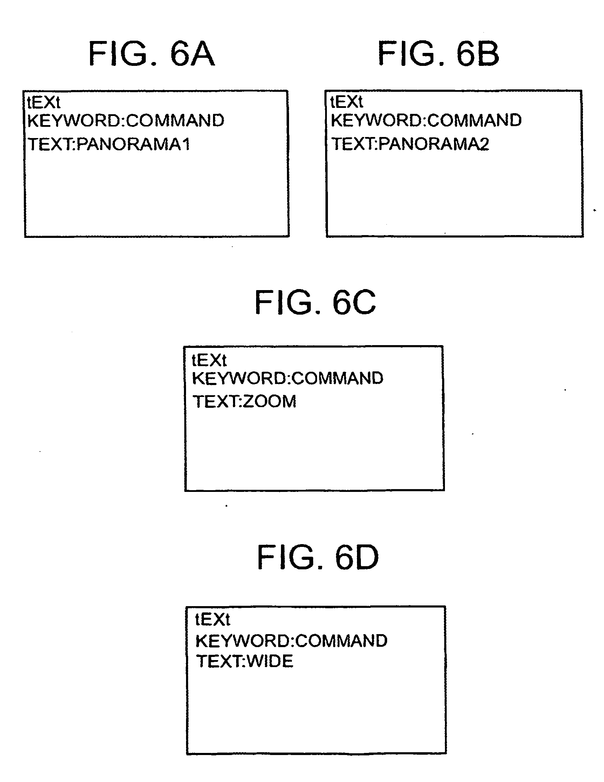

FIGs. 6A~6D are conceptual diagrams showing an example of the text chunk data according to the first embodiment. In the example shown in FIGs. 6A-6D, "Command" is used as the keyword. Additionally, as the value, the text data indicates what type of image display control is to be performed. For example, the value canbe set as in FIG. 6A "PANORAMA1" which indicates scrolling in the horizontal direction as the image display control; in FIG. 6B "PANORAMA2" which indicates the image scrolling in the vertical direction as the image display control; in FIG. 6C "ZOOM" which performs an enlarged display of the image as the image display control; and in FIG. 6D "WIDE" which performs reduced display of the image as the image display control.

### A-2. Operation of the first embodiment

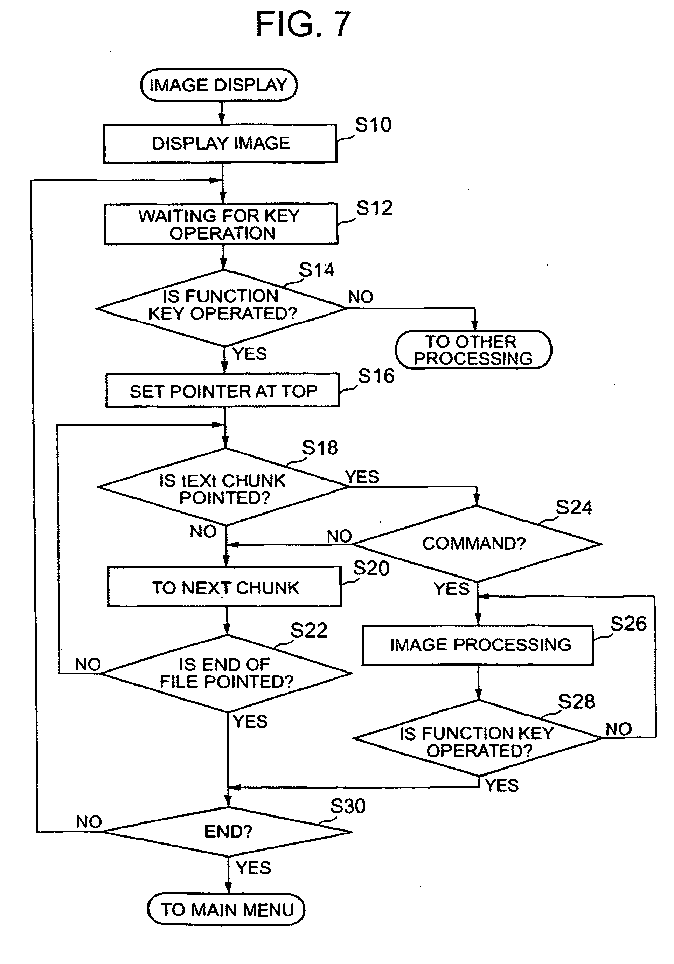

Next, operation of the cellular phone according to the first embodiment mentioned above will be explained. Here, FIG. 7 is a flowchart for explaining the operation of the cellular phone which displays the images in the first embodiment. In the cellular phone 1, when the image browse function is activated, the image is displayed (Step S10), and subsequently the operation will be in a waiting state for keystrokes containing the function key (Step S12). Next, the operation judges whether or not the function key (playback) has been depressed (Step S14). When the function key has not been depressed, the operation progresses to other processing.

Conversely, when the function key (playback) is depressed, the operation places the pointer at the top of the image file chunk corresponding to the image currently displayed (Step S16) . Next, the operation judges whether or not the position of the pointer is the text chunk (Step S18). If the pointer is not the text chunk, the pointer will be moved to the following chunk (Step S20), and the operation judges whether or not the pointer is at the end of the file (Step S22).

Further, if the pointer is at the end of the file, the operation judges whether or not the end command has been directed (Step S30). If the end has not been directed, the operation returns to Step S14 and the processing mentioned above is repeated. However, if end is directed, the processing will be completed.

Meanwhile, if the pointer is not at the end of the file, the operation will return to Step S18, the processing mentioned above will be repeated and the image file text chunk will be searched. When the text chunk is discovered, the operation will judge whether or not the keyword has been inserted which indicates insertion of the image display control information (Step S24). If the keyword is not inserted, the retrieval of the text chunk mentioned above progresses to Step S20 and will be continued.

Meanwhile, when the keyword has been inserted in the text chunk, the keyword is extracted from the image file text chunk as image display control information, and the display processing of the image is performed according to this image display control information (Step S26). Next, the operation judges whether or not the function key was operated (Step S28), and if the function key was not operated, processing of Step 26 is continued. As the function key, for example, there is "stop" and the like which suspends playback.

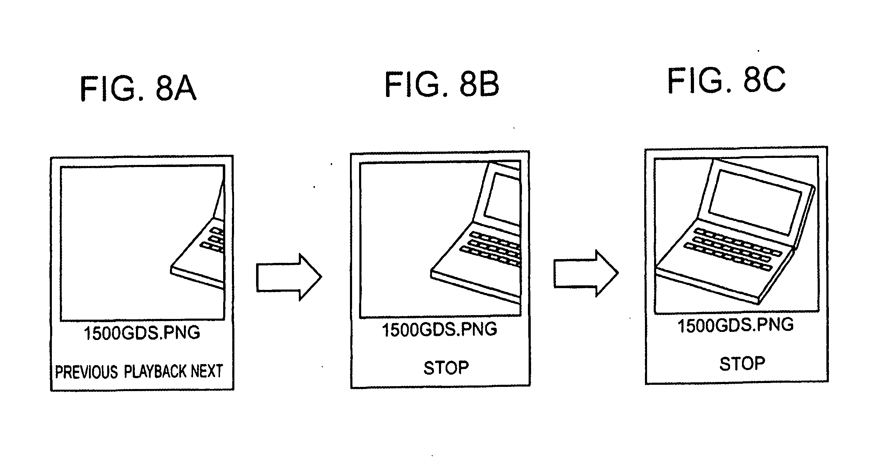

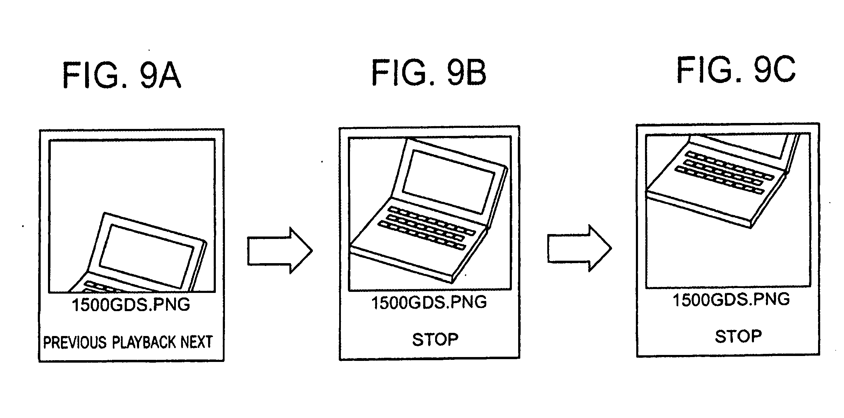

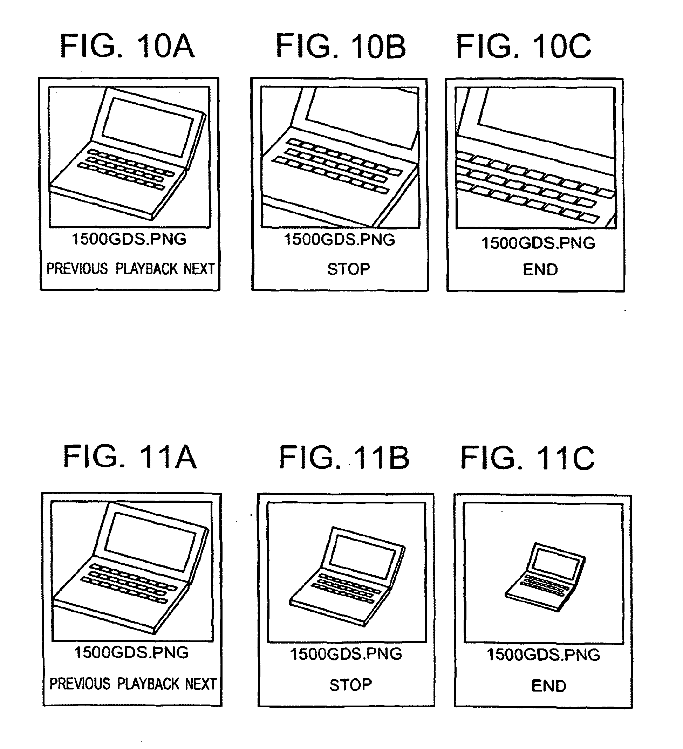

For example, when the image display control information is "PANORAMA1," as shown in FIGs. 8A-8C, the image is displayed scrolling automatically in the horizontal direction. For example, when the image display control information is "PANORAMA2," as shown in FIGs. 9A-9C, the image is displayed scrolling automatically in the vertical direction. Also, when the image display control information is "ZOOM," as shown in FIGs. 10A-10C, the image is displayed automatically and enlarges gradually. Besides, when the image display control information is "Wide," as shown in FIGs. 11A-11C, the image is displayed automatically and reduces gradually.

Next, the operation judges whether or not the end of playback of the image has been directed (Step S30). If end has not been directed, the operation returns to Step S14 and the processing mentionedabove is repeated. Conversely, if end has been directed, processing will be terminated.

According to the first embodiment mentioned above, the image display control information for controlling image reconstruction to the text chunk area in the PNG image file format has been described. Since the image was reproduced according this image display control information in the receiving side, it is related to image display processing. The image display processing can be performed by simpler operation processing and data processing without requiring complicated file management and data management.

### B. Second embodiment

### B-1. Configuration of the second embodiment

Next, the second embodiment will now be explained. In the second embodiment, which adds to the functions of the first embodiment above, assignment of the parameters in the text chunk at the time of performing display control of the image is enabled. The description of the configuration of the cellular phone 1 is omitted as it is the same as FIG. 1.

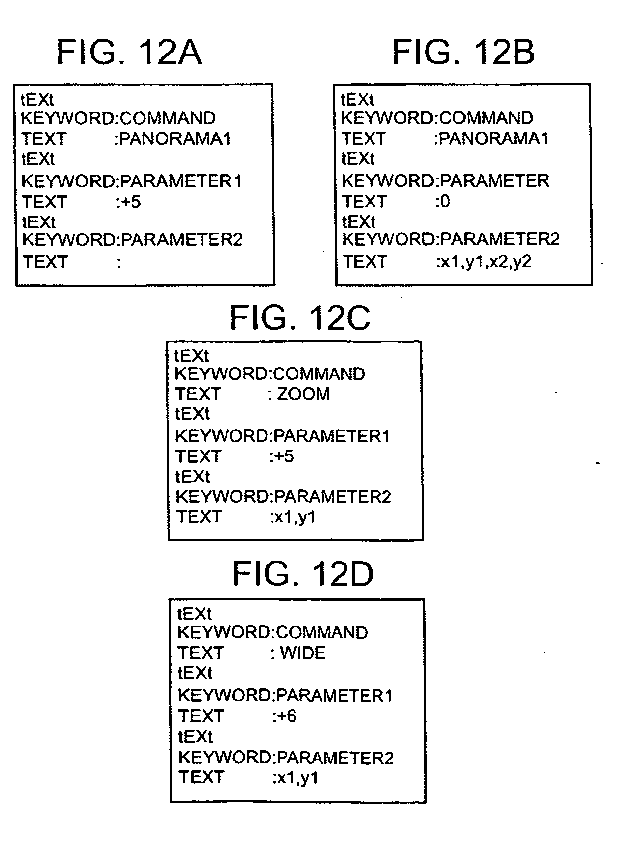

FIGs. 12A~12D are conceptual diagrams showing an illustrative example of the used text chunk in the second embodiment. In the examples shown in FIGs. 12A-12D, "Command" is used as the keyword. Moreover, as the same value, while containing the text data which indicates what type of image display control is to be performed, further contains the parameters for when performing image display control. For parameters, "PARAMETER1" for directing the playback speed, "PARAMETER2" for directing the playback start coordinates and the playback end coordinates are prepared. The parameter "PARAMETER1" is expressed by slow speed playback with "-" and fast forward playback with "+" on the basis of "0." Thus, it is possible to increase the playback speed as the numerical value becomes larger. Furthermore, the parameter "PARAMETER 2" expresses the playback starting coordinate and the playback ending coordinate which are the coordinates at the time of setting the upper left corner of the image to "0,0." For example, in FIG. 12A, "PANORAMA1" for displaying the image with scrolling in a horizontal direction and "+5" is set as "PARAMETER 1" which directs the playback speed as the image display control. In this case, it shows that the image is scrolled in the horizontal direction ("+" indicates right direction, and "-" indicates left direction) with playback speed "+5."

In FIG. 12B, "PANORAMA1" for displaying the image with scrolling in a horizontal direction is set, and "x1, y1 (playback starting coordinates), x2, y2 (playback ending coordinates)" are set as "PARAMETER2" which indicates the playback starting coordinates and the playback ending coordinates as the image display control. In this case, the image scrolls in the horizontal direction from x1, y1 (playback starting coordinate) at the screen center, and then is stopped at x2, y2 (playback ending coordinate) as the screen center is shown.

In FIG. 12C, "ZOOM" for displaying the image with enlarging is set, "+5" is set as "PARAMETER1" which directs the playback speed, and "x1, y1" are set as "PARAMETER2" which indicates the zoom center coordinates. In this case, it shows that the image is zoomed with the playback speed "+5" as the coordinates x1, y1 as the screen center is shown.

Furthermore, in FIG. 12D, "Wide" for displaying the image data with reduction is set, "+6" is set as "PARAMETER1" which directs the playback speed, and "x1, y1 (center coordinates)" are set as "PARAMETER2" which indicates the center coordinate. In this case, it shows that image performs reduced display with the playback speed "+6" as the coordinates x1, y1 as the screen center is shown.

### B-2. Operation of the second embodiment

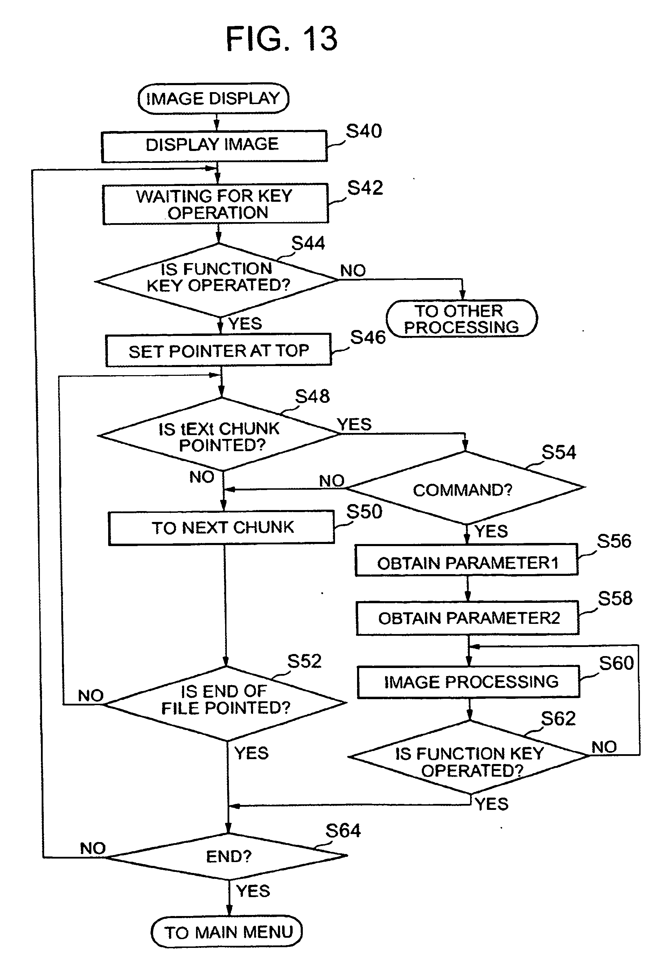

Next, the operation of the cellular phone according to the above second embodiment will be explained. FIG. 13 is a flowchart explaining the operation of the cellular phone which displays the images in the second embodiment. When the image browsing function is activated in the cellular phone 1, the image is displayed (Step S40), the operation will be in a waiting state waiting for the keystroke including the function key afterwards (Step S42). Next, the operation judges whether or not the function key (playback key) has been depressed (Step S44). When the function key has not been depressed, the operation progresses to other processing.

On the other hand, when the function key (playback key) is depressed, the pointer is located at the top of the text chunk of the image file corresponding to the displayed image (Step S46). Next, the operation judges whether or not the position of the pointer is indicated the text chunk (Step S48). When the pointer is not indicated in the text chunk, the pointer is moved to the next chunk (Step S50), the operation then judges whether or not the position of the pointer is indicated the end of the chunk (Step S52).

When the pointer is located at the end of the file, the operation judges whether or not the processing end has been directed (Step S64). If the processing end has not been directed, the operation then returns to Step S46, and repeats the above-mentioned processes. On the other hand, when the processing end is directed, the operation will be completed.

On the other hand, if the pointer is not at the end of the file, the operation will return to Step S48, the process mentioned above will be repeated and the image file text chunk will be searched. When the text chunk is discovered, the operation judges whether or not the keyword indicating has been inserted which indicates insertion of the image display control information (Step S54). If the keyword is not inserted, the operation proceeds to Step S50 and continues searching for the text chunk.

On the other hand, when the keyword is inserted in the text chunk, the "PARAMETER1" and the "PARAMETER2" are extracted from the text chunk of the image file (Steps S56, S58). The display processing of the image is performed using the "PARAMETER1" and the "PARAMETER2" according to the image display control information (Step S60). Next, the operation judges whether or not the function key was operated (Step S62), and if the function key was not operated, the operation then continues the processing of Step S60. For example, as the function key, there is "stop" and the like which suspends the playback operation.

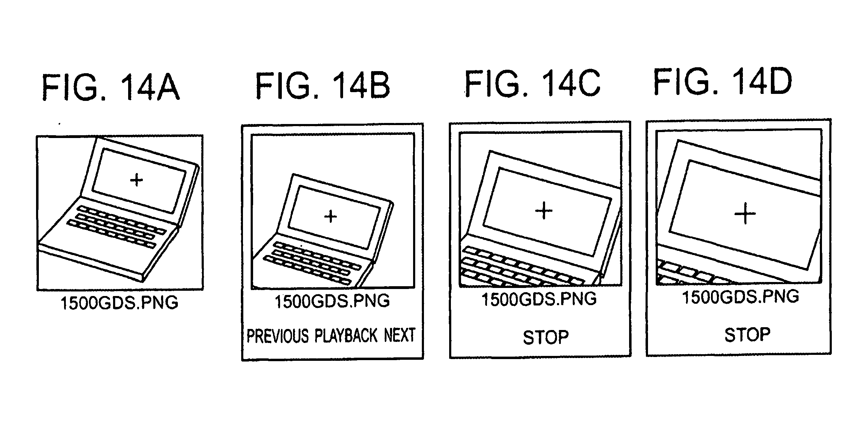

For example, when "ZOOM" is designated as the command, and the predetermined point (+) of the image, as shown in FIG. 14A, is designated at "PARAMETER 2" as the playback starting coordinate, the operation caries out zooming for the image data so that the playback starting coordinates are set as the screen center as shown in FIGs. 14B~14D.

When the playback of image is finished, the operation judges whether or not the process end is directed (Step S64). When the process end has not been directed, the operation returns to Step S44, and repeats the above mentioned processes. On the other hand, when the process end is ordered, the operation finishes this process.

According to the second embodiment, it is possible to process the display of the image by the simple operation processing and the information processing without needing any complicated file management or data management special operation, on the display processing of the image, since parameters (position coordinates) to indicate how the image is played is described in the image file in addition to the image playback control information to control image playback.

### C. Third embodiment

### C-1. Configuration of the third embodiment

Next, the third embodiment of this invention will be explained. In the third embodiment, it is possible to designate the display pixels, when the image is played back, in the text chunk of image file in the function of the above-mentioned first embodiment. Furthermore, when assignment of the display pixels at the time of reproducing the image in the image file text chunk is enabled and the display pixels are not in agreement with the display screen size of the cellular phone, the image is enlarged/reduced automatically. In addition, the description of the configuration of the cellular phone 1 is omitted as it is the same as FIG. 1.

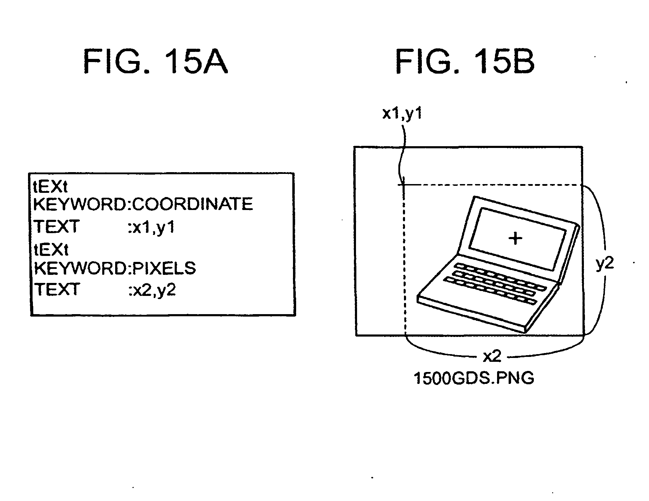

FIG. 15A is a conceptual diagram showing an illustrative example of the used text chunk in the third embodiment. In FIG. 15A, "Coordinate" is used as the keyword. As this value, the keyword "Command" has a starting point coordinates "x1, y1" to show which portion is displayed by the text data on the display screen of the cellular phone. Furthermore, by using "Pixels" as the keyword, as this value, the keyword "Pixels" has a display pixel size "x2, y2" by the text data. That is to say, these keywords indicate that the image is cut down into the size of "x2, y2" and with the starting point of "x1, y1" of the image to be displayed is displayed on the display screen of the cellular phone, as shown in FIG. 15B. At this time, the image data is reduced and is displayed when the display pixel size "x2, y2" is larger than size of the display screen of the cellular phone. On the contrary, the image data is enlarged and is displayed when the display pixel size "x2, y2" is smaller than that.

### C-2. Operation of the third embodiment

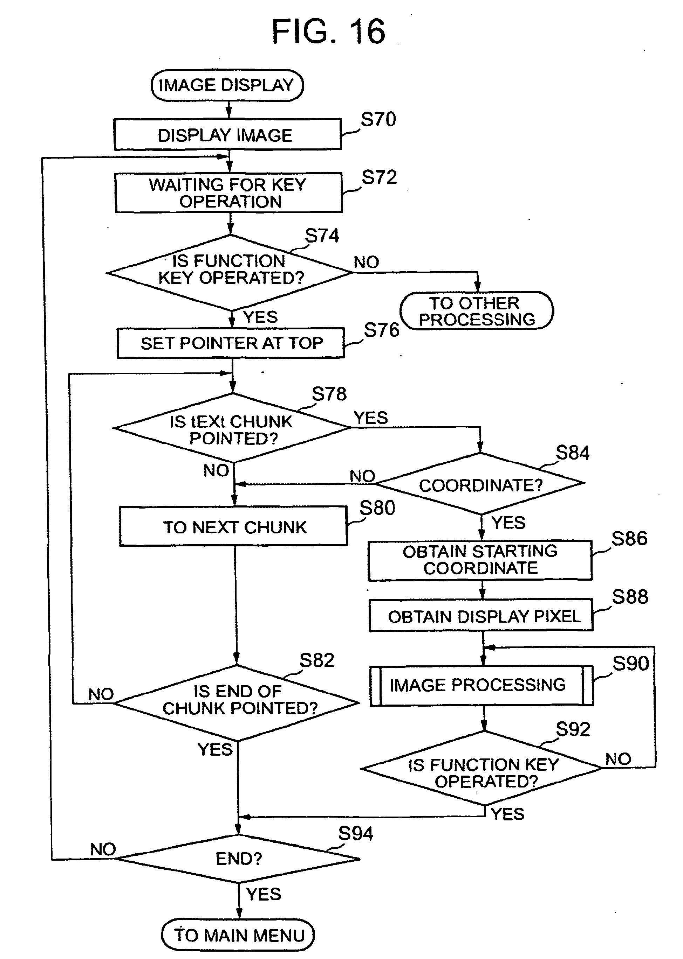

Next, an operation of the cellular phone according to the above third embodiment will be explained. FIG. 16 is a flowchart for explaining the operation of the cellular phone according to the third embodiment. When the image browse function is activated in cellular phone 1, the image is displayed (Step S70), the operation becomes a key operation wait state including the function key afterwards (Step S72). Next, the operation judges whether or not the function key (playback) has been operated (Step S74). When the function key has not been depressed, the operation proceeds to other processes.

On the other hand, when the functionkey (playback) is operated, the pointer is located at the top of the text chunk of the image file corresponding to the displayed image (Step S76). Next, the operation judges whether or not the position of the pointer is indicated the text chunk (Step S78). When the pointer is not indicated the text chunk, the pointer is moved to the next chunk (Step S80), the operation then judges whether or not the position of the pointer is indicated the end of the chunk (Step S82).

When the pointer is located at the end of the file, the operation judges whether or not the processing end has been directed (Step S94). If the processing end has not been directed, the operation then returns to Step S74, and repeats the above mentioned processes. On the other hand, when the processing end is directed, the operation finishes this process.

On the other hand, the pointer is not located at the end of the file, the operation returns to Step S78, and repeats the above mentioned processes, and searches the text chunk in the image file. When the text chunk is found, the operation judges whether or not the keyword indicating the insertion of the image display control information is inserted (Step S84). When the keyword is not inserted, the operation proceeds to Step S80, and continues the search of the text chunk.

On the other hand, when the keyword "Coordinate" is described in the text chunk, the text "x1, y1" showing origin coordinate is extracted from the text chunk of the image file, and the text "x2, y2" showing display pixel size is extracted (Steps S86, S88). The display process of image is then carried out by using the starting point coordinates and the display pixel size according to the image display control information (Step S90). Next, the operation judges whether or not the function key has been depressed (Step S92), if the function key has not been depressed, the operation then continues the processing of Step S90. For example, as the function keys, there are "back," "next" and "end" for stopping playback.

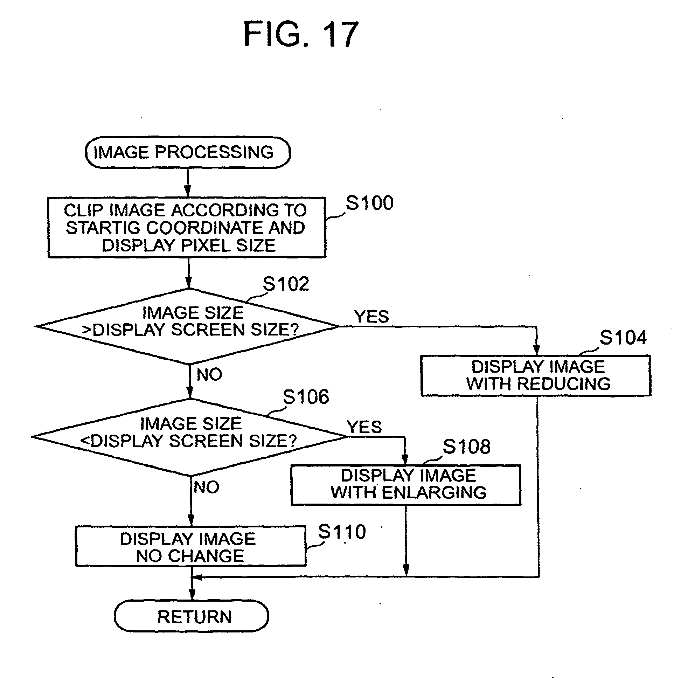

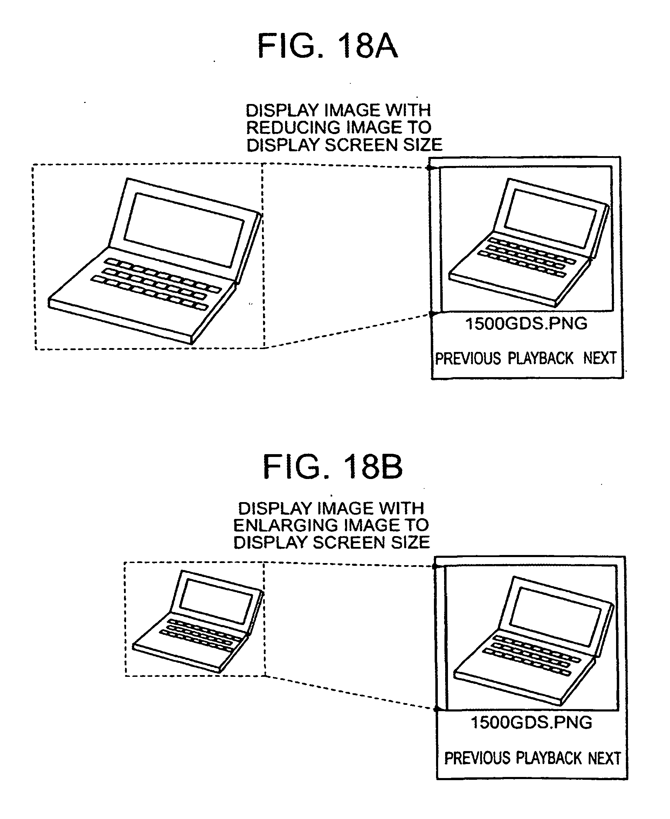

In the image display processing, the operation is carried out according to the flowchart showing to FIG. 17. At first, the clipping is carried out for the image according to the origin coordinate "x1, y1" and the display pixel size "x2, y2" (Step S100). Next, the operation judges whether or not the size of image is smaller than the display screen size (Step S102). When the display pixel size "x2, y2" is smaller than the display screen size of the cellular phone, the clipped image is reduced and displayed as shown in FIG. 18A (Step S104). The operation then returns to the flowchart shown in FIG. 16.

On the other hand, when the display pixel size "x2, y2" is not smaller than the display screen size of the cellular phone, the operation judges whether or not the size of image is larger than the display screen size (Step S106). When the display pixel size "x2, y2" is larger than the display screen size of the cellular phone, the clipped image is enlarged and is displayed as shown in FIG. 18B (Step S108). The operation then returns to the flowchart showing in FIG. 16.

Next, when the playback of image is finished, the operation judges whether the process end is ordered (Step S94). When the process end is not ordered, the operation returns to Step S74, and repeats the above mentioned processes. On the other hand, when the process end is ordered, the operation finishes this process.

According to the third embodiment, it is possible to play the image according to the starting point coordinates and the displaypixel size when the image is displayed, since the starting point coordinates and display pixel size of image are described in the image file as the image playback control information for controlling the playback of image. Therefore, it is possible to process the display of the image by the simple operation processing and the information processing without needing any complicated file management or data management special operation. In this case, for example, in the transmission/reception of E-mail that the image file is attached, When the user of transmission side of E-mail want to let pay attention to a specific part of the image corresponding to the attached image file for another user of reception side of E-mail, so far it is necessary to transmit image file after the user of transmission side performs processing to cut an unnecessary part from image file. On the other hand, the user of the reception side must previously get intention of the user of the transmission side, and must display image data after operated reduction, enlargement or scroll, etc.. Against this, in the third embodiment, it is possible to fully display on the display screen a part image directed in the transmission side without operating reduction, enlargement or scroll in the reception side, if the transmission side transmits the image file with designating the origin coordinate and the display pixel size so that only the image of specific part which wants to let pay attention to the user of the reception side is displayed.

### D. Fourth embodiment

Next, the fourth embodiment according to the present invention will be explained. In the fourth embodiment, in the functions of the mentioned above first embodiment, the position information (i.e. this information indicates a position such as image pick-up location; latitude and longitude) can be designated in the text chunk of the image file. When the above position information is inserted into the text chunk of the image file, the reception side transmits the inserted position information and the position information of itself to a map server which provides map information on a network through the network such as Internet, and then obtains the map information of the range that both position information is included, form the map server. Furthermore, the reception side enlarges/reduces the map information automatically, and scrolls automatically the map information from present position to the position inserted in the image data.

### D-1. Configuration of the fourth embodiment

### (1) System configuration

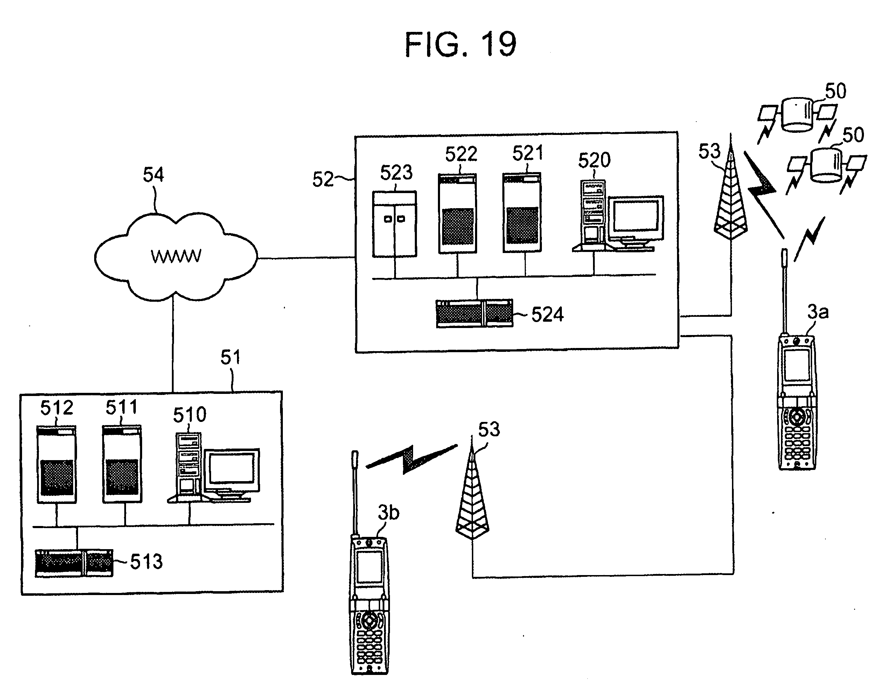

FIG. 19 is a conceptual diagram showing the configuration of the system operation of the fourth embodiment. The cellular phones 3a, 3b comprise a function to receive the latitude and longitude information of each of the neighboring base transceiver stations 53, 53 wherein the latitude and longitude is transmitted from the a plurality of neighboring base transceiver stations 53, 53, and to receive the latitude and longitude information received from a plurality of geodetic satellites 50, 50 (two in FIG. 19) connected with the cellular phone. Furthermore, the cellular phones 3a, 3b comprise a function to obtain a self-position by receiving compensation information replies from the above-mentioned plurality of neighboring base transceiver stations 53, 53 by transmitting the compensation information to the above-mentioned plurality of neighboring base transceiver stations 53, 53. The cellular phone 3a has an image pick-up function by a pick-up device. Furthermore, the cellular phone 3a has a function to insert the positional information of a photographic location into an image file and to transmit the image file by attachment in an E-mail to the cellular phone 3b through the base transceiver station 53 via the mail server 521 of the communications service provider 52. The communication service provider 52 consists of the main system 520, the mail server 521, the Web server 522, the switchboard 523 and the router 524, and manages the wireless communications network, and is also the Internet Service Provider (ISP).

The cellular phone 3b transmits the positional information inserted into the text chunk of the image file which is attached in E-mail received from the cellular phone 3a and the position information of itself to the map information service system 51 through the base transceiver station 53, Web server 522 of the communication service provider 52 and WWW (World Wide Web) 54, and requires the transfer of the map information (image file) of the range that these positionaal information are included. The map information service system 51 consists of the main system 510, Web server 511, the map information database 512 and the router 513. The map information service system 51 replies the map information (image file) extracted from the map information database 512 to the cellular phone 3b according to the positional information. When the cellular phone 3b obtains the map information, the cellular phone 3b automatically enlarges or reduces the image file, and may automatically scrolls the image file, which is enlarged or reduced, from the present position to the position which is inserted in the image file attached in the received E-mail. When the map information service system 51 receives the position information from the cellular phones 3a, 3b, the map information service system 51 may transmit the map information of the range that both position information are included. The map information database 512 stores map information of plural kinds of all areas every predetermined distance unit.

### (2) External view of the cellular phone

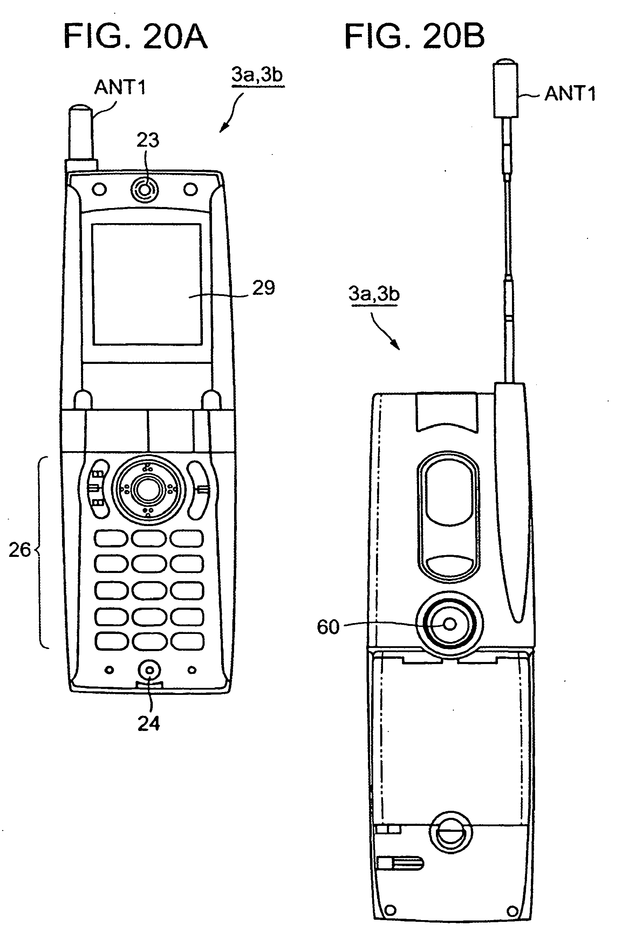

Next, FIGs. 20A and 20B are external views of the cellular phones 3a and 3b applied in the fourth embodiment. Incidentally, as the same reference numbers are shown for the configuration having the same function as the first embodiment, a detailed explanation has been omitted. This fourth embodiment is characterized that the cellular phone 3a comprises at least the photography function and the positional information obtaining function by GPS, and the cellular phone 3b comprises at least the positional information obtaining function.

The cellular phones 3a, 3b in the fourth embodiment are double fold structures comprising a cover and a main body, and FIG. 20A shows a front view of the cellular phones 3a, 3b in an open state. In the same figure, an antenna ATN1 is mounted on the back of the cover, and is telescopic. A speaker 23 is mounted on the front of the cover, and outputs the voice. A display (main display) 29 is a liquid crystal device comprising full color display function of QVGA class. A key input section 26 is mounted the front of the main body, and a microphone 24 is mounted below the main body. On the other hand, FIG. 20B shows a back view of the cellular phones 3a, 3b in the open state.

### (3) Constitution of the cellular phone

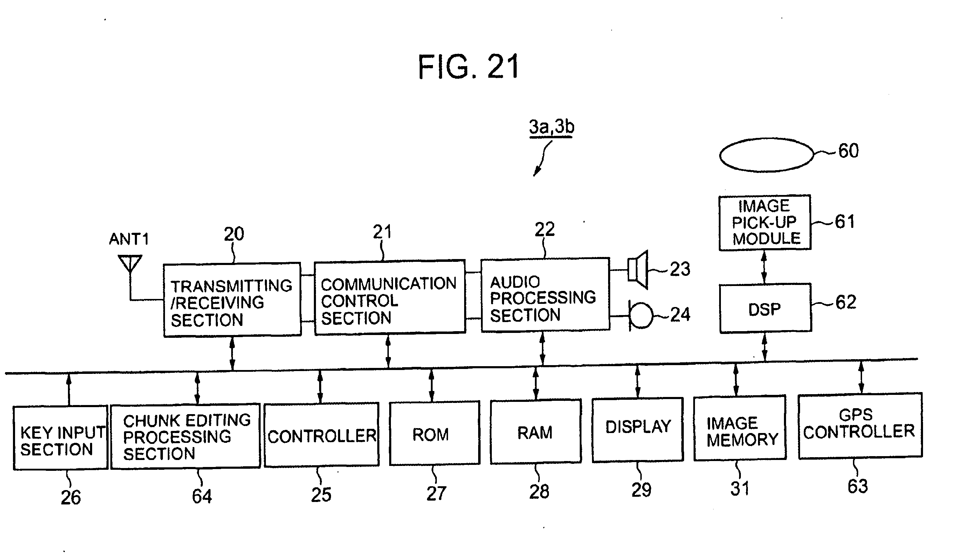

Next, FIG. 21 is a block diagram showing a constitution of the cellular phone 3a according to the fourth embodiment. Incidentally, the same reference numbers are shown for the part corresponding to FIG. 1, a detailed explanation has been omitted. In the fourth embodiment, the antenna ATN1, transmitting/receiving section (particularly, receiving function) 20 and the communication controller 21 further comprise a function to receive various information for generating latitude, longitude and time information from a plurality of geodetic satellites 50, 50, .... In this figure, a image pick-up module 61 is consisted of CCD or CMOS, and takes in color image of a subject through an imaging lens. DSP 62 carries out the encoding process for an image taken in by the image pick-up module 61. The image memory 31 stores image which are digitized, i.e. are files. This image file is coded by DSP 62, and is compressed by the controller 25.

A GPS controller 63 calculates a phase (a difference of a reception timing) of each received electric wave about an electric wave (1.22760G /1.57542GHz), which is demodulated by the transmitting/receiving section 20 and the communication controller 21, and is transmitted from at least about four geodetic satellites 50, 50, ..., among the Global Positioning Satellites (NAVSTAR) which Pentagon launched (twenty four satellites go around the earth at the present). The satellites may be less than four to obtain the positional information, but the precision will deteriorate. Furthermore, the GPS controller 63 obtains the position information which includes latitude, longitude (altitude) information indicating the present position, by carrying out the triangular surveying between the cellular phones 3a, 3b and these land survey satellites 50, 50, ....

The controller 25 may control operations of each section. A chunk editing processing section may insert the position information obtained by the GPS controller 63 into the text chunk of the image file at the time of photography. The image file is formed on the basis of the image which is photographed by image pick-up module 61 and which is coded by DSP 62.

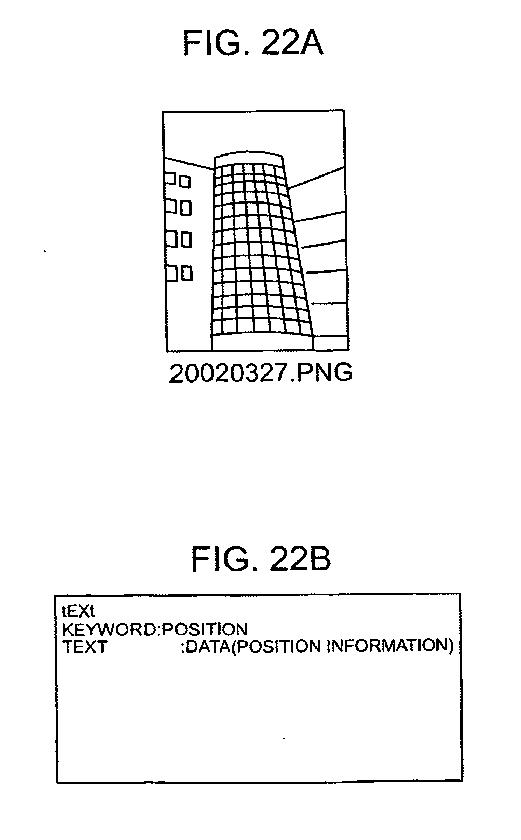

FIGs. 22A and 22B are conceptual diagrams showing an illustrative example of the used text chunk in the fourth embodiment. In the example shown in FIG. 22B, the keyword "Position" is used. This value may have the position information data obtained by GPS controller 63 at the time that the image is photographed as text data.

The cellular phone 3b receiving E-mail which the image file based on the photographed image is attached therein is also the same constitution as FIG. 1. But there are some different points. First of all, the controller 25 transmits the own position information which is obtained by GPS controller 63, and the position information which is inserted in the text chunk of the image file, to the map information service system 51. To the second, the controller 25 receives the map information including both position information, which is transmitted from the map information service system 51, and enlarges/reduces the map information automatically, and then scrolls the image from the present position to the position inserted in the image data.

### D-2. Operation of the fourth embodiment

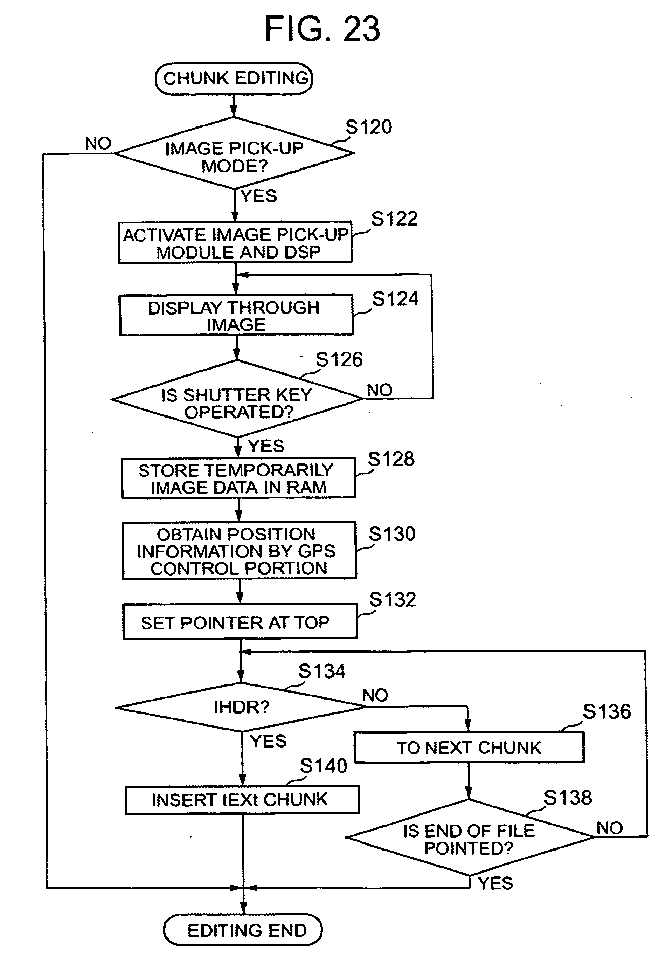

Next, the operation of the cellular phones 3a, 3b according to the above mentioned fourth embodiment will be explained. At first the insertion operation of the additional information into the image data by the cellular phone 3a will be explained. Here FIG. 23 is a flow chart for explaining operation to insert addition information into the text chunk of image data in cellular phone 3a. The operation judges whether or not the image pick-up mode is selected (Step S120). When the image pick-up mode is selected, the image pick-up module and DSP are activated (Step S122), and the image taken by image pick-up module 28 through the imaging lens 12 is coded to digital data, and is displayed on the display 6 as through image sequentially (Step S124). Next, the operation judges whether or not the shutter key 7 is operated (Step S126) . When the operation of shutter key 7 is detected, the image is taken by image pick-up module 28 through the imaging lens 12, and is coded to digital data by DSP 27, and then stored temporarily to RAM 25 (Step S128). The position information is then obtained by the antenna ATN1, the transmitting/receiving section 20, the communication controller 21 and the GPS controller 63 (Step S130).

Next, the operation proceeds to the forming processing of the image file on the basis of the picked-up image, and sets the pointer on the top of the chunk in the data block to be filed (Step S132). The operation then judges whether the position of the pointer is in IHDR (Step S134). When the pointer is not at IHDR, the pointer is moved to the next chunk (Step S136). The operation then judges whether the pointer is at the end of file (Step S138). When the pointer is not at the end of file, the operation returns to Step S134. The operation repeats the above mentioned processing, and searches IHDR in the image data. When IHDR is found, the position information is inserted into the back of IHDR as the text chunk (Step S140). According to the above-mentioned operation, the additional information is inserted into the text chunk of image file. Thus the image file is formed, and is stored to the image memory 31.

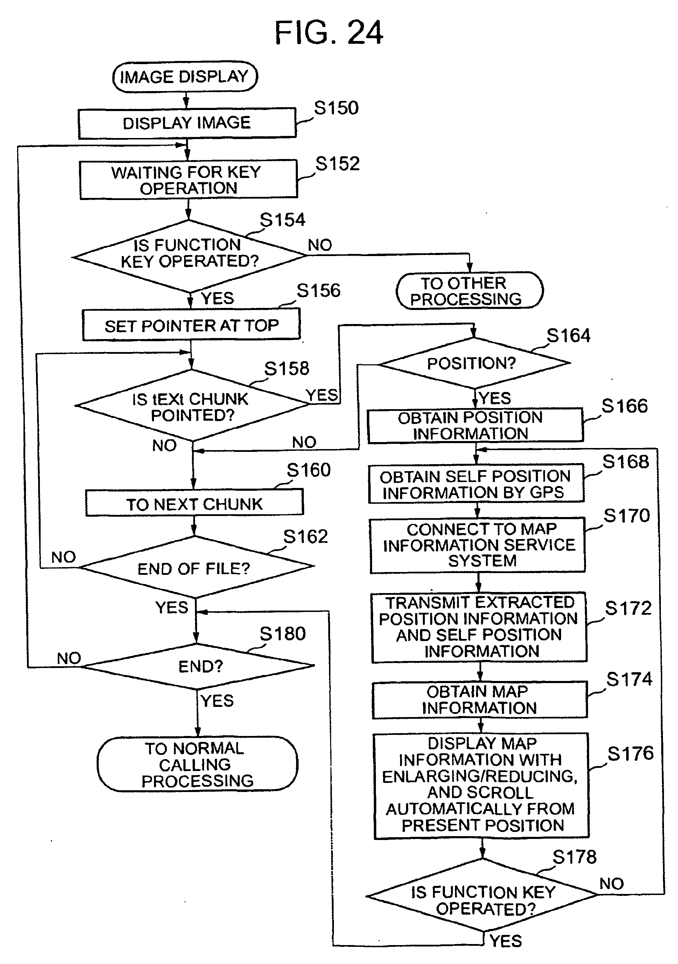

Next, an operation which carries out the image control for the image according to the image display control information inserted in the image file of E-mail (the image file is attached) which is received by cellular phone 3b, and is transmitted from cellular phone 3a will be explained. Here, FIG. 24 is a flow chart to explain the operation of the cellular phone 3b. In the cellular phone 3b, when the image browsing function is activated, the image based on the attached image file is displayed (Step S150), and the operation then becomes the wait state for the key operation including the function key (Step S152). Next, the operation judges whether the function key (playback) is pushed down (Step S154). When the function key is not pushed down, the operation proceeds to other processing.

On the other hand, when the function key (playback) is push down, the pointer is set at the top of the chunk in the image f ile corresponding to this image (Step S156) . Next, the operation judges whether the position of pointer is in the text chunk (Step S158). When the pointer is not at the text chunk, the pointer is moved to next chunk (Step S160). The operation then judges whether the pointer is at the end of file (Step S162).

When the pointer is at the end of the file, the operation judges whether the processing end is ordered (Step S164). When the processing end is not ordered, the operation then returns to Step S156, and repeats the above-mentioned processes. On the other hand, when the processing end is ordered, the operation finishes this process.

On the other hand, when the pointer is not at the end of the file, the operation returns to Step S158, and repeats the above-mentioned processes, and searches the text chunk in the image file. When the text chunk is found, the operation judges whether the keyword "Position" indicating the insertion of the image display control information is inserted (Step S164). When the keyword "Position" is not inserted, the operation proceeds to Step S160, and continues the search of the text chunk.

On the other hand, when the keyword "Position" is described in the text chunk, the position information Data is extracted from the text chunk of the image file (Step S166). Next, the position information of itself is obtained by GPS controller 63 (Step S168), and the cellular phone 3b is connected to the map information service system 51 through Web server 522 of the communication service enterprise 52 and WWW (World Wide Web) 54 (Step S170). Furthermore, the position information Data and the position information of itself are transmitted to the map information service system 51, and the reply of map information (image file) is required (Step S172). In the map information service system 51, the map information of the range that the position information Data and the position information of itself are included is extracted from the map information database 51, and is replied.

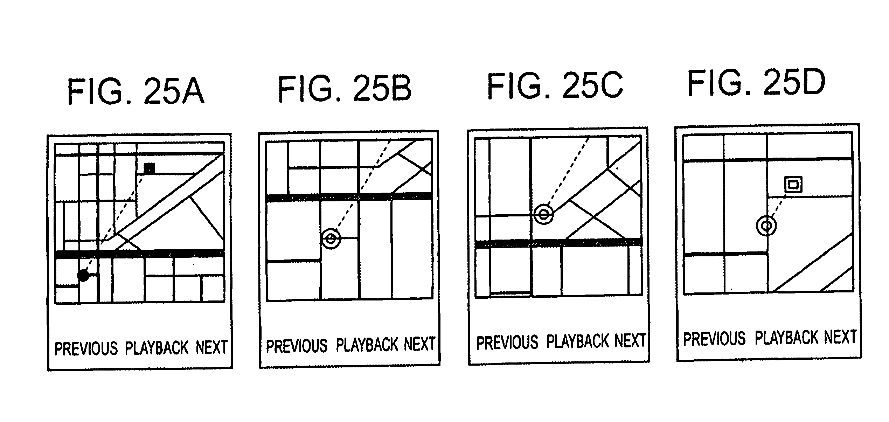

In the cellular phone 3b, the above map information is obtained, and is stored to the image memory 31 (Step S174). Next, the image based on the map information is displayed on the display 29 instead of the image based of the attached image file, and is also scrolled from the present position to the position which is specified by the position information Data inserted in the text chunk of image file (Step 176). In addition, the map information displayed first is reduced so that an area including the position of cellular phone 3b and the position inserted in the text chunk of image file can be displayed at the time, as shown in FIG. 25A. Next, the operation judges whether the function key such as pause or stop is operated (Step S178). When the function key is not operated, the operation returns to Step S168, and updates the position information of itself, and also scrolls the map from the present position to the position inserted in the image file by continuing the processing to display the map.

Next, when the playback of the map information is finished, the operation judges whether the process end is ordered (Step S180). When the process end is not ordered, the operation returns to Step S152, and repeats the above-mentioned processes. On the other hand, when the process end is ordered, this process is finished. In addition, at the end of display processing in this case, when the end order for the display processing of the map information, the image based on the attached image file may be displayed again, or both of the map information and the image based on the attached image file may be displayed.

According to the fourth embodiment, in the transmitting side, it is possible to insert the position information which relates to the pick-up place of the image into the text chunk of the image file to attach to E-mail to be transmitted as the image playback control information for controlling the playback of the image. Furthermore, in the receiving side, it is possible to display the map information, and to automatically scroll the map information from the present position to the position inserted in the image file, by obtain the map information from the map information service system according to the positional information of itself and the position information which is attached to the received E-mail. Thus, according to the fourth embodiment, it is possible to process the display of image by simple operation processing and simple information processing without needing any special operation, any complicated file management or data management in the receiving side. Furthermore, it is possible to identify a destination easily even if an error occurs in GPS function because the picked-up image (buildings or stores etc. at that place) also is displayed. In addition, in the fourth embodiment, the image and the map information which are based on the received image file may be displayed on each sub window at the same time, or may be displayed on respective windows more even if the display has a small screen area, if the display has more high-resolution image displaying ability.

### E. Fifth embodiment

Next, the fifth embodiment according to the present invention will be explained. In the fifth embodiment, the image file in the function of the fourth embodiment is stored as the image file according to DCF format, for example, by adding information in accordance with Exif standard to the compressed image with JPEG format. In Exif standard, the pick-up information, the file information and so on can be recorded to an additional information part called "tag" in a file. In the fifth embodiment, it is possible to designate the keyword indicating the insertion of the image display control information to the additional information part (user comment tag), and to designate the position information (information indicating the position such as photography place of the image; latitude, longitude) to the GPS Info tag. In the receiving side which receives such the image file, when the above image display control information and the position information are inserted into the tag information (user comment tag, GPS Info tag) of the received image file, the inserted position information and the position information of the receiving side oneself are transmitted to the map information service system 51 through the network such as WWW 54 as shown in FIG. 19, and the receiving side requests the reply of the map information. Next, the map information of the range that both position information is included, transmitted from the map information service system 51 in response to the above-mentioned request is obtained. Furthermore, the map information is automatically enlarged/reduced, and is automatically scrolled from the present position to the position inserted into the image data.

### E-1. Constitution of the fifth embodiment

Incidentally, the system configuration, and the appearance and the constitution of cellular phone according to the fifth embodiment are the same as that of shown in FIGs. 19, 20A~20B and 21, so that a detailed explanation has been omitted.

### (1) Constitution of an image file

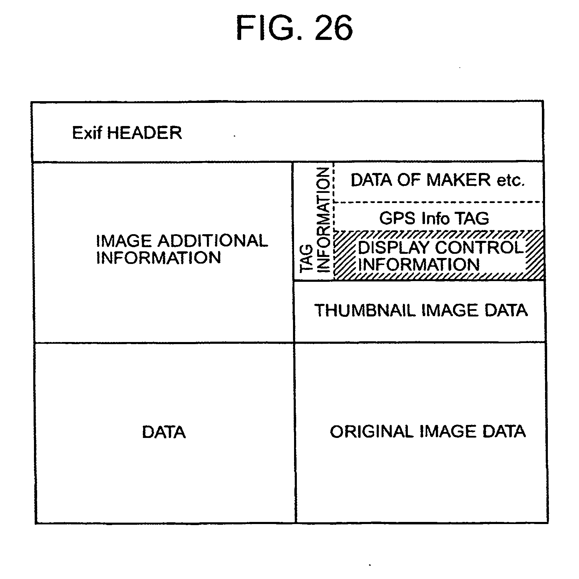

FIG. 26 is a conceptual diagram showing an example of data format of an image file (Exif) being used by the fifth embodiment. The image file of Exif standard consists of a header to distinguish that the image file is an image file of Exif standard, an image additional information which consists of a tag information including various information about image data and a thumbnail image data, and a photographed original image data. Various information such as the number of the pixels, the compression mode, the model name of camera, the iris value, shutter speed, photography date, user information, positional information (GPS Info tag) are recorded into tag information. In this embodiment, the display processing control for scroll display is recorded to the user comment tag arranged on these tag information, and the position information (information indicating the position such as photography place of the image; latitude, longitude) is recorded to GPS Info tag, respectively.

### E-2. Operation of the fifth embodiment

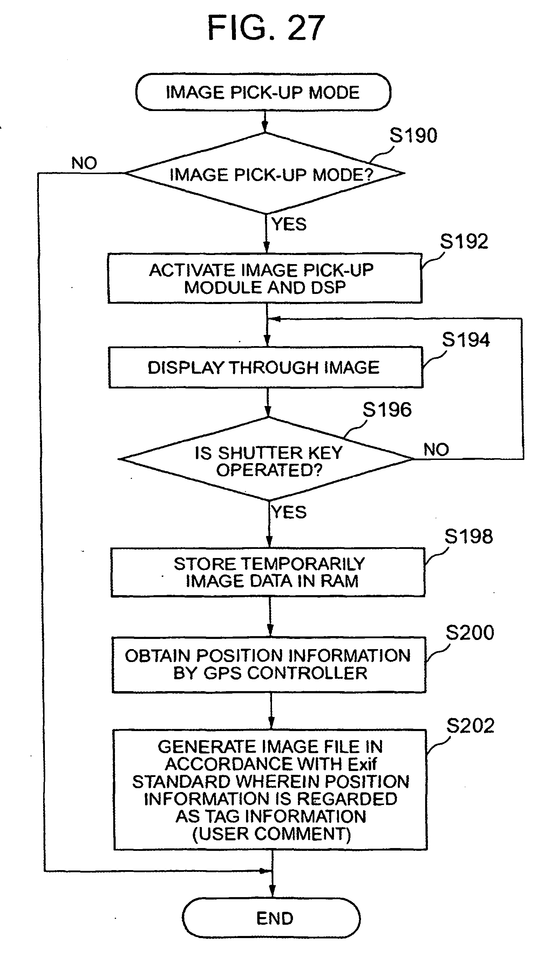

Next, the operation of the cellular phones 3a, 3b according to the fifth embodiment will be explained. At first the generating operation of image file from the image data by the cellular phone 3a, and the insertion operation of the additional information to the image file will be explained. Here, FIG. 27 is a flow chart explaining the operation to insert the additional information into the tag information of the image file in the cellular phone 3a. The operation judges whether the photography mode is selected or not (Step S190), when the photography mode is selected, the image pick-up module and DSP are activated (Step S192), and an image taken by image pick-up module 28 through the imaging lens 12 is coded to digital data by DSP 27 of the latter part, and is displayed as through image on display 6 sequentially (Step S194). Next, the operation judges whether the shutter key 7 is operated (Step S196). When the operation of shutter key 7 is detected, the image is taken by image pick-up module 28 through the imaging lens 12, and is coded to digital data, and also compressed by DSP 27, and then stored temporarily to RAM 25 (Step S198). The position information is then obtained by the GPS controller 63 (Step S200).

Next, the obtained position information is inserted in the GPS Info tag of the image file to be generated, and the display processing control information "keyword 'Position' " for carrying out the scrolling display of the section including two position information is inserted in the user comment tag of the image file to be generated, respectively, and the image file is generated in accordance with Exif standard, and the generated image file is stored to the image memory 31 (Step S202). By the above-mentioned operation, the additional information is inserted in the tag information (user comment) of the image file according to Exif standard.

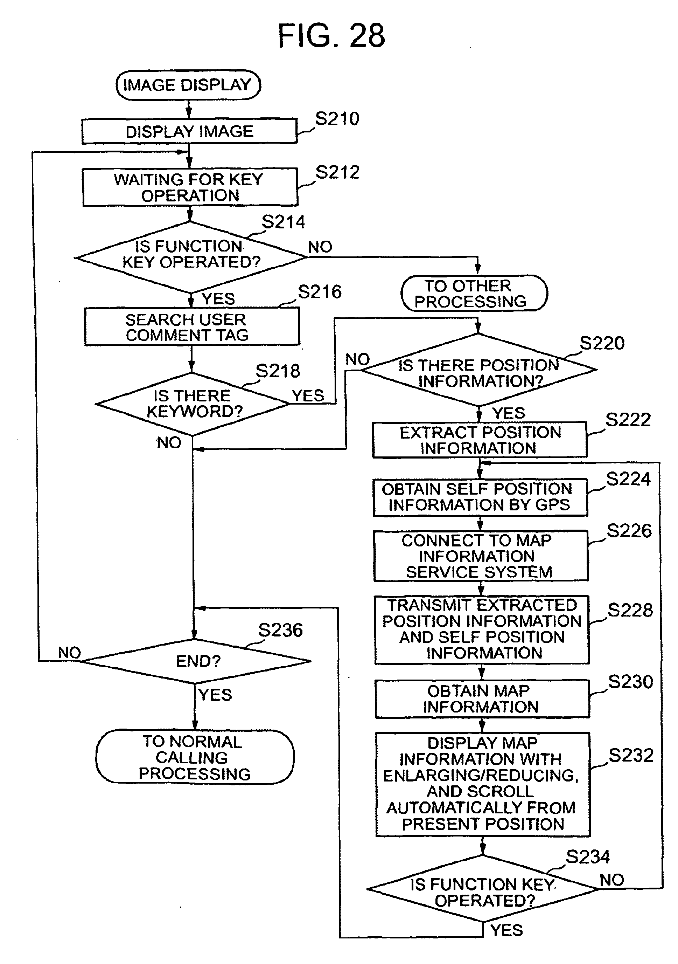

Next, the operation that the display control is carried out for the image on the basis of the image file received by the cellular phone 3b, and generated and transmitted (as image file attached to E-mail) by the cellular phone 3a as the mentioned above, according to the display control information inserted in the image file, will be explained. Here, FIG. 28 is a flowchart to explain the operation of the cellular phone 3b. When the image browsing function is activated in the cellular phone 3a, the image based on the received image file is displayed (Step S210), the operation then becomes the key operation wait state including the function key (Step S212). Next, the operation judges whether the function key (playback) is pushed down (Step S214). When the function key is not is not pushed down, the operation proceeds to other process.

On the other hand, when the function key (playback) is pushed down, the tag information (user comment) of the image file corresponding to the displayed image is searched (Step S216). Next, as the result, the operation judges whether the display processing control information "keyword 'Position'" is in the user comment tag (Step S218). When the displayprocessing control information "keyword 'Position'" is not in the user comment tag, the operation judges whether the process end is ordered (Step S236). When the process end is not ordered, the operation returns to Step S212, and repeats the above-mentioned processes. On the other hand, when the process end is ordered, the processing is finished.

On the other hand, when the display processing control information "keyword 'Position'" is found in the user comment tag, the operation judges whether the position information is inserted in GPS Info tag (Step S220). When the position information is not inserted, the operation proceeds to Step S236, and judges whether this process is finished or not.

On the other hand, when the position information is described in the GPS Info tag, the position information is extracted (Step S222). Next, the position information of itself is obtained by GPS controller 63 (Step S224), and the cellular phone 3b is connected to the map information service system 51 through Web server 522 of the communication service enterprise 52 and WWW (World Wide Web) 54 (Step S226). Furthermore, the position information and the position information of itself are transmitted to the map information service system 51, and the reply of map information (image file) is requested (Step S228). In the map information service system 51, the map information of the range that the position information data and the position information of itself are included is extracted from the map information database 51, and is replied.

In the cellular phone 3b, the above map information is obtained, and is stored to the image memory 31 (Step S230). Next, the image based on the map information is displayed on the display 29 instead of the image based of the attached image file, and is also scrolled from the present position to the position which is specified by the position information described in the GPS Info tag of the attached image file (Step S232). In addition, the map information displayed first is reduced so that an area including the position of cellular phone 3b and the position described in the GPS Info tag can be displayed at the time. Next, the operation judges whether the function key such as pause or stop is operated (Step S234). When the function key is not operated, the operation returns to Step S224, and updates the position information of itself, and also scrolls the map from the present position to the position inserted in the image file by continuing the processing to display the map.

Next, when the playback of the map information is finished, the operation judges whether the process end is ordered (Step S236). When the process end is not ordered, the operation returns to Step S212, and repeats the above-mentioned processes. On the other hand, when the process end is ordered, this process is finished.

According to the fifth embodiment, it is possible to play back the image data as the transmitting side intended without the specific operation in the receiving side as the transmitting side intended as the same as the first to fourth embodiments by inserting the image playback control information and position information in the tag information of the image file in accordance with Exif standard as the same as the image playback control information for controlling the image playback is inserted in the text chunk of the image data in the first to fourth embodiments.

Although the details of a cellular phone with a digital camera (image pick-up function) have been described in the above-mentioned embodiments, if the device are the portable multimedia player that the image data and movie data are stored to a built in semiconductor memory, and a digital camera comprising an image pick-up function, this invention canbe applied in several forms and must not be construed to limit this invention.

Furthermore, although the details of an image file of PNG format and an image file (an image file of JPEG format) wherein the tag is set according to Exif standard have been described in the above-mentioned embodiments, if the image file has an area where a description to correspond to the tag information or the text chunk is permitted, in the image file compressed with MPEG format or a compression coding manner based thereon, this invention can be applied in several forms and must not be construed to limit this invention.

As set forth above, the advantages of the present invention are as follows:

According to the present invention, it is possible to process the display of the image by simple information processing without needing complicated file management and data management in respect to display processing of the image, since when the image based on the image file stored in said stored means is displayed on said display means, the display of the image is controlled on the basis of the image display included in the image file corresponding to the image by said display control means.

According to the present invention, it is possible to process the display of the image by simple information processing without needing complicated file management and data management in respect to display processing of the image, since the image based on the image file stored in said stored means is displayed on the basis of the image display control information described in the text description area of the image file.

According to the present invention, it is possible to process the display of the image by simple information processing without needing complicated file management and data management in respect to display processing of the image, since when the display of image based on the image file is indicated at the indicating step, the image display control information included in the image file is extracted at the extracting step, the display of the image is then controlled on the basis of the extracted image display control information at the control step.

According to the present invention, it is possible to process the display of the image by simple information processing without needing complicated file management and data management in respect to display processing of the image, since a computer extracts the image display control information included in the image file at the extracting step when the display of image based on the image file is indicated at the indicating step, and controls the display of the image on the basis of the extracted image display control information at the control step.

While the present invention has been described with reference to the preferred embodiments, it is intended that the invention be not limited by any of the details of the description thereof.

As this invention can be embodied in several forms, the present embodiments are therefore illustrative and not restrictive, since the scope of the invention is defined by the appended claims rather than by the description preceding them, and all changes that fall within meets and bounds of the claims, or equivalence of such meets and bounds thereof are intended to be embraced by the claims.

## Claims

1. A display processing device (3a, 3b) comprising:
a storage means (31) for storing an image file, the image file comprising image information and image display control information;
a display means (29) for displaying an image based on the image information; and
a display control means (25) for controlling the display of said image based on the image display control information;
**characterized in that**
the display control means (25) is adapted for at least one of gradually enlarging the displayed image, and gradually reducing the displayed image, in accordance with the display control information.

2. The display processing device according to claim 1, wherein the display control means is adapted for obtaining said image display control information from a text description area included in said image file.

3. The display processing device according to claim 1, wherein said image display control information includes information to designate a display control method of said image and the parameters used for the display control processing, and said display control means is adapted for controlling the display of the image based on said parameters.

4. The display processing device according to claim 3, wherein said display control method includes a display control method to scroll said image, and the parameters express the display speed in the scrolling display.

5. The display processing device according to claim 3, wherein the display control method includes a display control method to scroll said image, and the parameters express at least the coordinates for starting said scrolling display.

6. The display processing device according to claim 3, wherein said display control method includes a display control method to display said image by enlarging or reducing said image, and said parameters express the coordinates for performing enlarged or reduced display in said image.

7. The display processing device according to claim 1, wherein said image display control information includes positional information, and further comprises;
a positional information acquisition means (20, 21, and 63) for acquiring the positional information of the actual location;
a map information storage means (31) for storing a range of map information including at least the positional information included in said image display information and the positional information of said actual location;
wherein said display control means is adapted for displaying said map information on said display means with display control contents based on the positional information included in said image display information and the positional information of said actual location.

8. The display processing device according to claim 7, further comprising;
a positional information transmitting means (20, 21) for transmitting the positional information included in said image display control information and the position information acquired by said positional information acquisition means to a map information database of an exterior device;
a map information receiving means (20, 21) for receiving said map information replies from said map information database which receives the positional information included in said image display control information transmitted by said positional information transmitting means and the positional information acquired by said positional information acquisition means;
wherein said map information storage means stores the map information received by said map information receiving means.

9. The display processing device according to claim 8, wherein said map information database is established on a communications network connected through a wireless communications network, further comprises:
a wireless communications means (20, 21) for communicating with said wireless communications network;
wherein at least one of said positional information transmitting means and said map information receiving means is adapted for transmitting or receiving information through said wireless communications means.

10. The display processing device according to claim 1, further comprising:
an image input means (60, 61 and 62);
an image display control information input means (64) for inputting said image display control information; and
an image file generation means (25) for generating an image file including the image inputted by said image input means and the image display control information inputted by said image display information input means.

11. The display processing device according to claim 10, wherein said image input means includes an image pick-up means (60, 61 and 62).

12. A display processing method comprising the steps of:
storing an image file in a storage means (31), the image file comprising image information and image display control information;
displaying an image based on the image information on a display means (29); and
controlling the displaying step based on the image display control information;
**characterized in that**
the displaying step is adapted for at least one of gradually enlarging the displayed image, and gradually reducing the displayed image, in accordance with the display control information.

13. The method according to claim 12, further comprising the step of obtaining said image display control information from a text description area included in said image file.

14. The method according to claim 12, wherein said image display control information includes information to designate a display control method of said image and the parameters used for the display control processing, and said display control step is adapted for controlling the display of the image based on said parameters.

15. The method according to claim 14, wherein said display control method includes a display control method to scroll said image, and the parameters express the display speed in the scrolling display.

16. The method according to claim 14, wherein the display control method includes a display control method to scroll said image, and the parameters express at least the coordinates for starting said scrolling display.

17. The method according to claim 14, wherein said display control method includes a display control method to display said image by enlarging or reducing said image, and said parameters express the coordinates for performing enlarged or reduced display in said image.

18. The method according to claim 12, wherein said image display control information includes positional information, and the method further comprises the steps of:
acquiring positional information of an actual location;
storing a range of map information including at least the positional information included in said image display information and the acquired positional information of said actual location in a map information storage means (31);
wherein said display control step is adapted for displaying said map information on said display means with display control contents based on the positional information included in said image display information and the positional information of said actual location.

19. The method according to claim 18, further comprises;
transmitting the positional information included in said image display control information and the position information acquired by said positional information acquisition means to a map information database of an exterior device;
receiving said map information replies from said map information database which receives the positional information included in said image display control information transmitted by said positional information transmitting means and the positional information acquired by said positional information acquisition means;
wherein said map information storage means stores the map information received by said map information receiving means.

20. The method according to claim 19, wherein said map information database is established on a communications network connected through a wireless communications network, further comprises:
communicating with said wireless communications network via a wireless communications means (20, 21);
wherein at least one of said positional information and said map information is transmitted or received through said wireless communications means.

21. The method according to claim 12, further comprising the steps of:
inputting said image and said image display control information; and
generating an image file including the inputted image and the inputted image display control information.

22. A computer program product comprising a computer readable medium having computer readable program code embodied thereon, the program code being adapted to cause a computer to carry out all steps of any of claims 12 to 21.

## Patentansprüche

1. Anzeige-Verarbeitungsvorrichtung (3a, 3b), die umfasst:
eine Speichereinrichtung (31) zum Speichern einer Bilddatei, wobei die Bilddatei Bild-Informationen und Bildanzeigesteuerungs-Informationen umfasst;
eine Anzeigeeinrichtung (29) zum Anzeigen eines Bildes auf Basis der Bild-Informationen; und
eine Anzeigesteuerungs-Einrichtung (25) zum Steuern der Anzeige des Bildes auf Basis der Bildanzeigesteuerungs-Informationen;
**dadurch gekennzeichnet, dass**
die Anzeigesteuerungs-Einrichtung (25) so eingerichtet ist, dass sie entsprechend den Anzeigesteuerungs-Informationen das angezeigte Bild stufenweise vergrößert oder/und das angezeigte Bild stufenweise verkleinert.

2. Anzeige-Verarbeitungsvorrichtung nach Anspruch 1, wobei die Anzeigesteuerungs-Einrichtung so eingerichtet ist, dass sie die Bildanzeigesteuerungs-Informationen aus einem Textbeschreibungsbereich bezieht, der in der Bilddatei enthalten ist.

3. Anzeigesteuerungs-Vorrichtung nach Anspruch 1, wobei die Bildanzeigesteuerungs-Informationen Informationen enthalten, die ein Anzeigesteuerungs-Verfahren des Bildes und die für die Anzeigesteuerungs-Verarbeitung verwendeten Parameter angeben, und die Anzeigesteuerungs-Einrichtung so eingerichtet ist, dass sie die Anzeige des Bildes auf Basis der Parameter steuert.

4. Anzeigeverarbeitungs-Vorrichtung nach Anspruch 3, wobei das Anzeigesteuerungs-Verfahren ein Anzeigesteuerungs-Verfahren zum Rollen des Bildes einschließt und die Parameter die Anzeigegeschwindigkeit in der rollenden Anzeige ausdrücken.

5. Anzeigeverarbeitungs-Vorrichtung nach Anspruch 3, wobei das Anzeigesteuerungs-Verfahren ein Anzeigesteuerungs-Verfahren zum Rollen des Bildes einschließt und die Parameter wenigstens die Koordinaten zum Starten der rollenden Anzeige ausdrücken.

6. Anzeigeverarbeitungs-Vorrichtung nach Anspruch 3, wobei das Anzeigesteuerungs-Verfahren ein Anzeigesteuerungs-Verfahren zum Anzeigen des Bildes durch Vergrößern oder Verkleinern des Bildes einschließt und die Parameter die Koordinaten zum Durchführen von vergrößerter oder verkleinerter Anzeige in dem Bild ausdrücken.

7. Anzeigeverarbeitungs-Vorrichtung nach Anspruch 1, wobei die Bildanzeigesteuerungs-Informationen Positions-Informationen enthalten und die Vorrichtung des Weiteren umfasst:
eine Positions-Informations-Erfassungseinrichtung (20, 21 und 63) zum Erfassen der Positions-Informationen des tatsächlichen Standorts:
eine Karten-Informations-Speichereinrichtung (31) zum Speichern eines Bereiches von Karten-Informationen, der wenigstens die in den Bildanzeige-Informationen enthaltenen Positions-Informationen und die Positions-Informationen des tatsächlichen Standorts enthält;
wobei die Bildanzeigesteuerungs-Einrichtung so eingerichtet ist, dass sie die Karten-Informationen auf der Anzeigeeinrichtung mit Anzeigesteuerungs-Inhalt auf Basis der in den Bildanzeige-Informationen enthaltenen Positions-Informationen und den Positions-Informationen des tatsächlichen Standorts anzeigt.

8. Anzeigeverarbeitungs-Vorrichtung nach Anspruch 7, die des Weiteren umfasst:
eine Positions-Informations-Sendeeinrichtung (20, 21) zum Senden der in den Bildanzeigesteuerungs-Informationen enthaltenen Positions-Informationen und der durch die Positions-Informations-Erfassungseinrichtung erfassten Positions-Informationen zu einer Karten-Informations-Datenbank einer externen Vorrichtung;
eine Karten-Informations-Empfangseinrichtung (20, 21) zum Empfangen der Kartenlnformations-Antworten von der Karten-Informations-Datenbank, die die Positions-Informationen, die in den durch die Positions-Informations-Sendeeinrichtung gesendeten Bildanzeigesteuerungs-Informationen enthalten sind, und die durch die Positions-Informations-Erfassungseinrichtung erfassten Positions-Informationen empfängt;
wobei die Karten-Informations-Speichereinrichtung die durch die Karten-Informations-Empfangseinrichtung empfangenen Karten-Informationen speichert.

9. Anzeigesteuerungsvorrichtung nach Anspruch 8, wobei die Karten-Informations-Datenbank in einem Kommunikationsnetz eingerichtet ist, das über ein Drahtlos-Kommunikationsnetz verbunden ist, und die Vorrichtung des Weiteren umfasst:
eine Drahtlos-Kommunikationseinrichtung (20, 21) zum Kommunizieren mit dem Drahtlos-Kommunikationsnetz;
wobei die Positions-Informations-Sendeeinrichtung oder/und die Karten-Informations-Empfangseinrichtung zum Senden oder Empfangen von Informationen über die Drahtlos-Kommunikationseinrichtung eingerichtet ist/sind.

10. Anzeigeverarbeitungs-Vorrichtung nach Anspruch 1, die des Weiteren umfasst:
eine Bild-Eingabeeinrichtung (60, 61 und 62);
eine Einrichtung (64) für Eingabe von Bildanzeigesteuerungs-Informationen zum Eingeben der Bildanzeigesteuerungs-Informationen; und
eine Bilddatei-Erzeugungseinrichtung (25) zum Erzeugen einer Bilddatei, die das durch die Bild-Eingabeeinrichtung eingegebene Bild sowie die durch die Einrichtung für Eingabe von Bildanzeigesteuerungs-Informationen eingegebenen Bildanzeigesteuerungs-Informationen enthält.

11. Anzeige-Verarbeitungsvorrichtung nach Anspruch 10, wobei die Bild-Eingabeeinrichtung eine Bild-Aufnahmeeinrichtung (60, 61 und 62) enthält.

12. Anzeigeverarbeitungs-Verfahren, das die folgenden Schritte umfasst:
Speichern einer Bilddatei in einer Speichereinrichtung (31), wobei die Bilddatei Bild-Informationen und Bildanzeigesteuerungs-Informationen umfasst;
Anzeigen eines Bildes auf Basis der Bild-Informationen auf einer Anzeigeeinrichtung (29); und
Steuern des Anzeigeschritts auf Basis der Bildanzeigesteuerungs-Informationen;
**dadurch gekennzeichnet, dass**
der Anzeigeschritt zum stufenweise Vergrößern des angezeigten Bildes oder/und stufenweise Verkleinern des angezeigten Bildes entsprechend den Anzeigesteuerungs-Informationen eingerichtet ist.

13. Verfahren nach Anspruch 12, das des Weiteren den Schritt des Beziehens der Bildanzeigesteuerungs-Informationen aus einem Textbeschreibungsbereich umfasst, der in der Bilddatei enthalten ist.

14. Verfahren nach Anspruch 12, wobei die Bildanzeigesteuerungs-Informationen Informationen enthalten, die ein Anzeigesteuerungs-Verfahren des Bildes und die für die Anzeigesteuerungs-Verarbeitung verwendeten Parameter angeben, und die Anzeigesteuerungs-Einrichtung so eingerichtet ist, dass sie die Anzeige des Bildes auf Basis der Parameter steuert.

15. Verfahren nach Anspruch 14, wobei das Anzeigesteuerungs-Verfahren ein Anzeigesteuerungs-Verfahren zum Rollen des Bildes einschließt und die Parameter die Anzeigegeschwindigkeit in der rollenden Anzeige ausdrücken.

16. Verfahren nach Anspruch 14, wobei das Anzeigesteuerungs-Verfahren ein Anzeigesteuerungs-Verfahren zum Rollen des Bildes einschließt und die Parameter wenigstens die Koordinaten zum Starten der rollenden Anzeige ausdrücken.

17. Verfahren nach Anspruch 14, wobei das Anzeigesteuerungs-Verfahren ein Anzeigesteuerungs-Verfahren zum Anzeigen des Bildes durch Vergrößern oder Verkleinern des Bildes einschließt und die Parameter die Koordinaten zum Durchführen von vergrößerter oder verkleinerter Anzeige in dem Bild ausdrücken.

18. Verfahren nach Anspruch 12, wobei die Bildanzeigesteuerungs-Informationen Positions-Informationen enthalten und das Verfahren des Weiteren die folgenden Schritte umfasst:
Erfassen von Positions-Informationen eines tatsächlichen Standorts;
Speichern eines Bereiches von Karten-Informationen, der wenigstens die in den Bildanzeige-Informationen enthaltenen Positions-Informationen und die erfassten Positions-Informationen des tatsächlichen Standorts enthält, in einer Karten-Informations-Speichereinrichtung (31);
wobei der Anzeigesteuerungs-Schritt zum Anzeigen der Karten-Informationen auf der Anzeigeeinrichtung mit Anzeigesteuerungs-Inhalt auf Basis der in den Bildanzeige-Informationen enthaltenen Positions-Informationen und der Positions-Informationen des aktuellen Standorts eingerichtet ist.

19. Verfahren nach Anspruch 18, das des Weiteren umfasst:
Senden der in den Bildanzeigesteuerungs-Informationen enthaltenen Positions-Informationen und der durch die Positions-Informations-Erfassungseinrichtung erfassten Positions-Informationen zu einer Karten-Informations-Datenbank einer externen Vorrichtung;
Empfangen der Karten-Informations-Antworten von der Karten-Informations-Datenbank, die die Positions-Informationen, die in den durch die Positions-Informations-Sendeeinrichtung gesendeten Bildanzeigesteuerungs-Informationen enthalten sind und die durch die Positions-Informations-Erfassungseinrichtung erfassten Positions-Informationen empfängt;
wobei die Karten-Informations-Speichereinrichtung die durch die Karten-Informations-Empfangseinrichtung empfangenen Karten-Informationen speichert.

20. Verfahren nach Anspruch 19, wobei die Karten-Informations-Datenbank in einem Kommunikationsnetz eingerichtet ist, das über ein Drahtlos-Kommunikationsnetz verbunden ist, und das Verfahren des Weiteren umfasst:
Kommunizieren mit dem Drahtlos-Kommunikationsnetz über eine Drahtlos-Kommunikationseinrichtung (20, 21);
wobei die Positions-Informationen oder/und die Karten-Informationen über die Drahtlos-Kommunikationseinrichtung gesendet oder empfangen werden.

21. Verfahren nach Anspruch 12, das des Weiteren die folgenden Schritte umfasst:
Eingeben des Bildes und der Bildanzeigesteuerungs-Informationen; und
Erzeugen einer Bilddatei, die das eingegebene Bild und die eingegebene Bildanzeigesteuerungs-Informationen enthält.

22. Computerprogrammerzeugnis, das ein computerlesbares Medium umfasst, auf dem computerlesbarer Programmcode enthalten ist, wobei der Programmcode so eingerichtet ist, dass er einen Computer veranlasst, alle Schritte nach einem der Ansprüche 12 bis 21 auszuführen.

## Revendications

1. Dispositif de traitement d'affichage (3a, 3b) comprenant :
un moyen de stockage (31) permettant de stocker un fichier d'image, le fichier d'image comprenant des informations d'image et des informations de commande d'affichage d'image ;
un moyen d'affichage (29) permettant d'afficher une image en se basant sur les informations d'image ; et
un moyen de commande d'affichage (25) permettant de commander l'affichage de ladite image en se basant sur les informations de commande d'affichage d'image ;
**caractérisé en ce que**
le moyen de commande d'affichage (25) est adapté pour au moins l'une des fonctions d'agrandissement progressif de l'image affichée et de réduction progressive de l'image affichée conformément aux informations de commande d'affichage.

2. Dispositif de traitement d'affichage selon la revendication 1, dans lequel le moyen de commande d'affichage est adapté pour obtenir lesdites informations de commande d'affichage à partir d'une zone de description de texte incluse dans ledit fichier d'image.

3. Dispositif de traitement d'affichage selon la revendication 1, dans lequel lesdites informations de commande d'affichage d'image comprennent des informations permettant de désigner un procédé de commande d'affichage de ladite image et des paramètres utilisés pour le traitement de commande d'affichage, et ledit moyen de commande d'affichage est adapté pour commander l'affichage de l'image en se basant sur lesdits paramètres.

4. Dispositif de traitement d'affichage selon la revendication 3, dans lequel ledit procédé de commande d'affichage comprend un procédé de commande d'affichage pour faire défiler ladite image, et les paramètres expriment la vitesse d'affichage dans l'affichage de défilement.

5. Dispositif de traitement d'affichage selon la revendication 3, dans lequel le procédé de commande d'affichage comprend un procédé de commande d'affichage pour faire défiler ladite image, et les paramètres expriment au moins les coordonnées pour démarrer ledit affichage de défilement.

6. Dispositif de traitement d'affichage selon la revendication 3, dans lequel ledit procédé de commande d'affichage comprend un procédé de commande d'affichage pour afficher ladite image en agrandissant ou réduisant ladite image, et lesdits paramètres expriment les coordonnées pour réaliser un affichage agrandi ou réduit de l'image dans ladite image.

7. Dispositif de traitement d'affichage selon la revendication 1, dans lequel lesdites informations de commande d'affichage comprennent des informations de position, et comprennent en outre :
un moyen d'acquisition d'informations de position (20, 21 et 63) permettant d'acquérir les informations de position de l'emplacement réel ;
un moyen de stockage d'informations cartographiques (31) permettant de stocker une plage d'informations cartographiques comprenant au moins les informations de position incluses dans lesdites informations d'affichage d'image et les informations de position dudit emplacement réel ;
dans lequel ledit moyen de commande d'affichage est adapté pour afficher lesdites informations cartographiques sur ledit moyen d'affichage avec des contenus de commande d'affichage en se basant sur les informations de position incluses dans lesdites informations d'affichage d'image et les informations de position dudit emplacement réel.

8. Dispositif de traitement d'affichage selon la revendication 7, comprenant en outre :
un moyen de transmission d'informations de position (20, 21) pour transmettre les informations de position incluses dans lesdites informations de commande d'affichage et les informations de position acquises par ledit moyen d'acquisition d'informations de position à une base de données cartographiques d'un dispositif extérieur ;
un moyen de réception d'informations cartographiques (20, 21) permettant de recevoir lesdites réponses d'informations cartographiques en provenance de ladite base de données d'informations cartographiques qui reçoit les informations de position incluses dans lesdites informations de commande d'affichage d'image transmises par ledit moyen de transmission d'informations de position et les informations de position acquises par ledit moyen d'acquisition d'informations de position ;
dans lequel ledit moyen de stockage d'informations cartographiques stocke les informations cartographiques reçues par ledit moyen de réception d'informations cartographiques.

9. Dispositif de traitement d'affichage selon la revendication 8, dans lequel ladite base de données d'informations de carte est établie sur un réseau de communications connecté via un réseau de communications sans fil, et comprend en outre :
un moyen de communications sans fil (20, 21) pour communiquer avec ledit réseau de communications sans fil ;
dans lequel au moins l'un dudit moyen de transmission d'informations de position et dudit moyen de réception d'informations cartographiques est adapté pour transmettre ou recevoir des informations via ledit moyen de communications sans fil.

10. Dispositif de traitement d'affichage selon la revendication 1, comprenant en outre :
un moyen d'entrée d'image (60, 61 et 62) ;
un moyen d'entrée d'informations de commande d'affichage d'image (64) permettant d'entrer lesdites informations de commande d'affichage d'image ; et
un moyen de génération d'image de fichier (25) permettant de générer un fichier d'image comprenant l'image entrée par ledit moyen d'entrée d'image et les informations de commande d'affichage d'image entrées par ledit moyen d'entrée d'informations d'affichage d'image.

11. Dispositif de traitement d'affichage selon la revendication 10, dans lequel ledit moyen d'entrée d'image comprend un moyen de capture d'image (60, 61 et 62).

12. Procédé de traitement d'affichage comprenant les étapes :
de stockage d'un fichier d'image dans un moyen de stockage (31), le fichier d'image comprenant des informations d'image et des informations de commande d'affichage d'image ;
d'affichage d'une image en se basant sur les informations d'image sur un moyen d'affichage (29) ; et
de commande de l'étape d'affichage en se basant sur les informations de commande d'affichage d'image ;
**caractérisé en ce que**
l'étape d'affichage est adaptée pour au moins agrandir progressivement l'image affichée ou réduire progressivement l'image affichée, en conformité avec les informations de commande d'affichage.

13. Procédé selon la revendication 12, comprenant en outre l'étape d'obtention desdites informations de commande d'affichage en provenance d'une zone de description de texte comprise dans ledit fichier d'image.

14. Procédé selon la revendication 12, dans lequel lesdites informations de commande d'affichage d'image comprennent des informations pour désigner un procédé de commande d'affichage de ladite image et les paramètres utilisés pour le traitement de commande d'affichage, et ladite étape de commande d'affichage est adaptée pour commander l'affichage de l'image en se basant sur lesdits paramètres.

15. Procédé selon la revendication 14, dans lequel ledit procédé de commande d'affichage comprend un procédé de commande d'affichage pour faire défiler ladite image, et les paramètres expriment la vitesse d'affichage dans l'affichage de défilement.

16. Procédé selon la revendication 14, dans lequel le procédé de commande d'affichage comprend un procédé de commande d'affichage pour faire défiler ladite image, et les paramètres expriment au moins les coordonnées pour démarrer ledit affichage de défilement.

17. Procédé selon la revendication 14, dans lequel ledit procédé de commande d'affichage comprend un procédé de commande d'affichage pour afficher ladite image en agrandissant ou réduisant ladite image, et lesdits paramètres expriment les coordonnées pour réaliser un affichage agrandi ou réduit dans ladite image.

18. Procédé selon la revendication 12, dans lequel lesdites informations de commande d'affichage d'image comprennent des informations de position, et le procédé comprend en outre les étapes :
d'acquisition d'informations de position d'un emplacement réel ;
de stockage d'une plage d'informations cartographiques comprenant au moins les informations de position incluses dans lesdites informations d'affichage d'image et les informations de position acquises dans ledit emplacement réel dans un moyen de stockage d'informations cartographiques (31) ;
dans lequel ladite étape de commande d'affichage est adaptée pour afficher lesdites informations cartographiques sur ledit moyen d'affichage avec des contenus de commande d'affichage en se basant sur les informations de position incluses dans lesdites informations d'affichage d'image et les informations de position dudit emplacement réel.

19. Procédé selon la revendication 18, comprenant en outre :
la transmission des informations de position incluses dans lesdites informations de commande d'affichage et les informations de position acquises par ledit moyen d'acquisition d'informations de position à une base de données d'informations cartographiques d'un dispositif extérieur ;
la réception desdites réponses d'informations cartographiques depuis ladite base de données d'informations cartographiques qui reçoit les informations de position incluses dans lesdites informations de commande d'affichage transmises par ledit moyen de transmission d'informations de position et les informations de position acquises par ledit moyen d'acquisition d'informations de position ;
dans lequel ledit moyen de stockage d'informations cartographiques stocke les informations cartographiques reçues par ledit moyen de réception d'informations cartographiques.

20. Procédé selon la revendication 19, dans lequel ladite base de données d'informations cartographiques est établie sur un réseau de communications connecté via un réseau de communications sans fil, et comprend en outre :
la communication avec ledit réseau de communications sans fil via un moyen de communications sans fil (20, 21) ;
dans lequel au moins une desdites informations de position et desdites informations cartographiques est transmise ou reçue via ledit moyen de communications sans fil.

21. Procédé selon la revendication 12, comprenant en outre les étapes :
d'entrée de ladite image et desdites informations de commande d'affichage ; et
de génération d'un fichier d'image comprenant l'image émise en entrée et les informations de commande d'affichage d'image entrées.

22. Produit de programme informatique comprenant un support lisible par ordinateur ayant un code de programme lisible par ordinateur incorporé, le code de programme étant adapté pour amener l'ordinateur à réaliser toutes les étapes de l'une quelconque des revendications 12 à 21.
